# EUROPÄISCHE PATENTSCHRIFT

(11) **EP 3 451 816 B1**
(45) Veröffentlichungstag und Bekanntmachung des Hinweises auf die Patenterteilung: **04.03.2020**
(21) Anmeldenummer: 17722421.9
(22) Anmeldetag: 05.05.2017
(51) Int. Cl.: A01D 46/253, A01D 46/26

(54) **ERNTE-ROBOTER ZUM ERNTEN VON BAUMFRÜCHTEN**
HARVESTING ROBOT FOR HARVESTING TREE FRUITS
ROBOT DE CUEILLETTE POUR CUEILLIR DES FRUITS D'ARBRES

(30) Priorität: 06.05.2016 CH 5992016
(43) Veröffentlichungstag der Anmeldung: 13.03.2019
(73) Patentinhaber: Pippi, Pierluigi, 8806 Bäch (CH)
(72) Erfinder: Pippi, Pierluigi, 8806 Bäch (CH)
(74) Vertreter: Felber, Josef
(86) Internationale Anmeldenummer: PCT/EP2017/060827
(87) Internationale Veröffentlichungsnummer: WO 2017/191316

(56) Entgegenhaltungen:
- EP-A1- 2 566 317
- US-A- 4 377 064

## Beschreibung

Diese Erfindung betrifft einen Ernte-Roboter zum effizienten und schonenden Pflücken von Baumfrüchten, insbesondere von Oliven oder Nüssen. Das Abernten von Olivenbäumen als Beispiel, aber auch von Nussbäumen, erfolgt in den meisten Fällen immer noch von Hand. Vor allem an alten Olivenbaum-Beständen in hügeligem Gelände ist das Abernten maschinell nur beschränkt oder bestenfalls mit semiautomatischen Hilfsmitteln für das händische Abernten möglich. Es ist eine sehr aufwändige und anstrengende Arbeit, die hohe Personalkosten bedingt. Um eine hochwertige Qualität der Oliven sicherzustellen, sollen die effektiven Früchte im reifen und nicht überreifen Zustand geerntet werden. Beim Ernten mit gängigen maschinellen Hilfsmitteln wird die Baumrinde häufig beschädigt, was sich in den Folgejahren in Form von reduzierten Ernteerträgen auswirken kann.

Es existieren gewisse Erntemaschinen, zum Beispiel der Olive Harvester OXBO 6420 Olive Harvester der Firma OXBO aus Lynden, WA 98264 (www.oxbocorp.com). Diese Maschine ist dazu bestimmt, der Länge nach über eine Reihe von Olivensträuchern zu fahren. Dabei strippt sie die Oliven mit verhältnismässig invasiven Eingriffen von beiden Seiten des Baumes aus mit dort um Vertikalachsen drehenden, radial von dieser Achse abstehenden Erntestäben, welche durch die Äste des Baumes geschwungen werden. Die Maschine ist zwar effizient, aber kann nur auf mehr oder weniger ebenem Grund für das Abernten von präzise in einer Reihe angeordneten Olivensträuchern bzw. Olivenbäumchen eingesetzt werden. Diese Maschine ist nicht in kupiertem Gelände an unregelmässig stehenden und insbesondere alten und somit relativ grossen Olivenbäumen einsetzbar, die in einem unregelmässigen Muster gepflanzt sind.

Weiter ist im Stand der Technik aus EP 2 566 317 B1 eine Vorrichtung zum Bewegen von zwei Reihen von Zinken gegeneinander bekannt. Diese Bewegung erfolgt auf der Basis einer Rotationsbewegung, die in eine schwingende Bewegung umgewandelt wird. Die Vorrichtung wird auf eine Support-Einrichtung montiert und dann in den Baum hineingefahren. AU 2010 257 276 A1 zeigt eine weitere Vorrichtung zum Ernten von Oliven. Ein kubischer Rahmen wird über einen Baum gestülpt und um die Achse des Baumstammes um den Baum rotiert. Es ragen Finger oder Zinken auf verschiedenen Höhen horizontal ins Innere des Baumes und diese können hin und her schwingen. WO 2003 069 975 A1 zeigt einen weiteren Ernteautomaten. Zwei halbkreisförmige Rahmen werden beidseits um einen Baum gefahren und zusammengeschwenkt. Finger ragen ab dem halbkreisförmigen Rahmen in den Baum hinein und können darin auf und ab geschwungen sowie hin und her bewegt werden. Im Grundsatz arbeiten solche Geräte mit Fingern oder Zinken, die gegeneinander schwingen und dabei langsam aus dem Baum gezogen werden. Schliesslich zeigt US 4,377,064 mit Stäben, die in Längsrichtung federbelastet sind und dazu bestimmt sind, in einen Baum translatorisch hineingeschoben zu werden und mit ihren Spitzen grössere Früchte vom Baum wegzupressen bzw. wegzustossen. Wenn ein Stab beim Einfahren in den Baum mit seiner Spitze auf einen starken Ast auftrifft, so fährt die Halterung der Stäbe weiter in den Baum hinein, aber der betreffende Stab wird gegen Federkraft in der Halterung zurückgefahren und der Stab bleibt somit gegenüber dem Baum stationär. Die Früchte werden mit der gummibewehrten Spitze der Stäbe vom Baum gestossen. Die Stäbe werden nicht geschwenkt, sondern nur translatorisch bewegt und wären für Oliven als relative kleine Früchte kaum wirksam.

Keines der bisher bekanntgewordenen Geräte eignet sich für das schonungsvolle und effiziente Abernten von Olivenbäumen oder Nussbäumen auch in hügeligem Gelände, vor allem wenn der Baumbestand alt ist, die Bäume entsprechend gross gewachsen sind, und wenn die Bäume in unregelmässigen Mustern gepflanzt sind und ihre Kontur nicht besonders symmetrisch ist. In Europa zum Beispiel sind die Olivenbäume in grossmehrheitlich alten Olivenhainen gepflanzt, oftmals in kupiertem Gelände, und die Bäume sind in der Regel sehr alt, zum Teil mehrere hundert Jahre alt. Die Olivenhaine stehen auch vielerorts unter Naturschutz. Solche Olivenbäume können bisher nur händisch abgeerntet werden, bieten aber Oliven von autochthoner, hoher Qualität.

Die Aufgabe der vorliegenden Erfindung ist es vor dem Hintergrund dieser Situation und dieses Standes der Technik, einen Ernte-Roboter zum Pflücken von Baumfrüchten anzugeben, welcher das rasche, rationelle, kostengünstige und sanfte Pflücken von Baumfrüchten ermöglicht, und der speziell auch in hügeligem Gelände einsetzbar ist. Der Ernte-Roboter soll sich in einer Ausführung besonders für das Ernten von Oliven ab den Olivenbäumen eignen, selbst wenn es sich um unregelmässig stehende, auch grosse und alte Bäume auf geneigtem Terrain handelt. Der Ernte-Roboter soll in einer Ausführung an einen Traktor oder an ein Hanggeräte-Trägerfahrzeug anbaubar sein und in einer weiteren Ausführung mit einem eigenen geländegängigen Fahrwerk realisierbar sein, und sowohl selbstgesteuert als auch ferngesteuert einsetzbar sein.

Diese Aufgabe wird gelöst von einem Ernte-Roboter zum Pflücken von Baumfrüchten, mit mindestens zwei parallel zueinander verlaufenden, horizontal abstehenden und versetzten Reihen von Pflückstäben, die in ihrem hinteren Bereich in einer Halterung gehalten und mit dieser kollektiv mit ihren freien vorderen Enden in einen Baum hineinschiebbar sind und mit ihren vorderen Enden gegeneinander schwenkbar und wieder öffnenbar sind, und als Ganzes in jedem Schwenkzustand kollektiv aus dem Baum herausziehbar sind, unter Abziehen von Früchten zwischen den Pflückstäben der beiden Reihen von Pflückstäben, *und der sich dadurch auszeichnet, dass* die einzelnen Pflückstäbe jeder Reihe in ihrem hinteren Bereich translatorisch gegen eine Federkraft nach hinten verschiebbar in der Halterung gelagert sind, sodass jeder Pflückstab innerhalb einer Reihe beim Einfahren der Pflückstäbe in einen Baum beim Anschlagen mit seinem vorderen Ende an einem Ast durch denselben stoppbar ist, während alle nicht auf ein Hindernis auftreffenden Pflückstäbe weiter in den Baum hineinschiebbar sind, wonach die Pflückstäbe der beiden Reihen in ihrer translatorischen Position gegeneinander hin und her oszillierbar sind, und gleichzeitig oder anschliessend an ein Zusammenschwenken mittels der Halterung rückwärts aus dem Baum herausziehbar sind, wobei alle Pflückstäbe durch die Kraft der wirkenden Federn nach vorne schiebbar und somit in ihre Ausgangslage bringbar sind.

Eine mögliche Ausführung dieses Ernte-Roboters wird in den Zeichnungen gezeigt und anhand dieser Zeichnungen wird der Ernte-Roboter im Folgenden beschrieben und seine Funktion wird erläutert.

Es zeigt:
- Figur 1: Den Ernte-Roboter von schräg vorne gesehen, im Zustand zum erstmaligen Einfahren in einen Baum mit den Pflückstäben in ihrer obersten Lage;
- Figur 2: Eine Ansicht des Ernte-Roboters von vorne gesehen;
- Figur 3: Den Ernte-Roboter von schräg vorne gesehen, im Zustand zum erstmaligen Einfahren in einen Baum und angebaut an ein Hanggeräte-Trägerfahrzeug;
- Figur 4: Eine Ansicht des Ernte-Roboters von schräg vorne gesehen, mit nach unten zusammengefahrenem Ernte-Roboter, zum Fahren auf einer Strasse;
- Figur 5: Eine Ansicht des Ernte-Roboters schräg oben und hinten gesehen;
- Figur 6: Eine Ansicht des Ernte-Roboters von oben gesehen;
- Figur 7: Eine Ansicht des Ernte-Roboters von schräg vorne und oben gesehen, mit fehlender linker Seitenwand und angebaut an ein Hanggeräte-Trägerfahrzeug;
- Figur 8: Das Detail A in Figur 7 vergrössert dargestellt;
- Figur 9: Das Detail B in Figur 7 vergrössert dargestellt, das heisst einen Blick senkrecht auf die Fahrzeugseite;
- Figur 10: Den Ernteroboter mit eingefahrenen, das heisst zurückgezogenen Pflückstäben in einer Ansicht von schräg vorne;
- Figur 11: Den Ernteroboter mit eingefahrenen, das heisst zurückgezogenen Pflückstäben in einer Ansicht von schräg hinten;
- Figur 12: Den Ernteroboter mit eingefahrenen, das heisst zurückgezogenen Pflückstäben in einer Ansicht auf seine linke Seite, wenn er in einem Hang von unten an einen abzuerntenden Baum herangefahren wird;
- Figur 13: Den Ernteroboter mit eingefahrenen, das heisst zurückgezogenen Pflückstäben in einer Ansicht auf seine rechte Seite, wenn er in einem Hang von oben an einen abzuerntenden Baum herangefahren wird;
- Figur 14: Den Ernteroboter mit eingefahrenen, das heisst zurückgezogenen Pflückstäben in einer Ansicht von vorne, wenn er in einem Hang auf der Höhenkurve auf einen nicht dargestellten abzuerntenden Baum herangefahren wird;
- Figur 15: Den Ernteroboter mit eingefahrenen, das heisst zurückgezogenen Pflückstäben auf horizontalem Grund, wobei der Erntekopf mit all seinen Elementen gegenüber dem Fahrzeug seitlich neigbar am Fahrzeug gelagert ist, und hier auf eine Seite geneigt ist;
- Figur 16: Den Ernteroboter wie in Figur 3 dargestellt, aber mit gegen Federkräfte nach hinten eingeschobenen Pflückstäben;
- Figur 17: Den Erntekopf des Ernteroboters aus Figur 16 in vergrösserter Darstellung, mit den nach hinten geschobenen Pflückstäben;
- Figur 18: Den Erntekopf des Ernteroboters aus Figur 17 in weiter vergrösserter Darstellung, von schräg hinten und oben gesehen, mit den nach hinten geschobenen Pflückstäben;
- Figur 19: Den Ernte-Roboter auf einem eigenen Fahrgestell aufgebaut, mit dem Erntekopf in seine oberste Position ausgefahren und nach hinten ausgefahrenen Pflückstäben, auf die linke Seite hin gesehen;
- Figur 20: Den Ernte-Roboter auf einem eigenen Fahrgestell aufgebaut, mit dem Erntekopf in seine unterste Position eingefahren, auf die linke Seite hin gesehen;
- Figur 21: Den Ernteroboter hinter einem angedeuteten Olivenbaum beim Hineinfahren in denselben gegen den Betrachter hin;
- Figur 22: Das Detail A in Figur 21;
- Figur 23: Zwei übereinander angeordnete Pfückstäbe von der Seite her gesehen, je mit ihrer Spitze an einem Ast anschlagend;
- Figur 24: Ein Blick von vorne gegen die vorderen Enden von zwei Pflückstab-Reihen gesehen, mit ihrer Wirkung auf die zu erntenden Früchte;
- Figur 25: Den Erntekopf mit nur je einem Pflückstab der oberen und einem der unteren Reihe, zur Veranschaulichung deren Aufhängung und ihres Antriebes, in gegen vorne gespreizter Lage der beiden Pflückstäbe;
- Figur 26: Den Erntekopf mit nur je einem Pflückstab der oberen und einem der unteren Reihe, zur Veranschaulichung deren Aufhängung und ihres Antriebes, in vorne zusammengeschwenkter Lage der beiden Pflückstäbe, beim Auftreffen auf ein vertikales Hindernis;
- Figur 27: Den Erntekopf mit der Vielzahl von längsverschiebbaren Pflückstäben und ihren zugehörigen Pneumatik-Schläuchen in einer Ansicht von schräg oben und hinten;
- Figur 28: Den Erntekopf mit der Vielzahl von längsverschiebbaren Pflückstäben und ihren zugehörigen Pneumatik-Schläuchen in einer Ansicht von oben;
- Figur 29: Den Erntekopf mit der Vielzahl von längsverschiebbaren Pflückstäben und ihren zugehörigen Pneumatik-Schläuchen in einer Schnittansicht A-A aus Figur 28 von der Seite her gesehen;
- Figur 30: Das Detail A in Figur 29;
- Figur 31: Das Detail B in Figur 29;
- Figur 32: Das Detail C in Figur 29;
- Figur 33: Den Erntekopf mit der Vielzahl von längsverschiebbaren Pflückstäben und ihrer federnden Aufhängungen in einer Ansicht von vorne gesehen;
- Figur 34: Detail D in Figur 33;
- Figur 35: Die linke Seitenwand des Ernte-Roboters in nach oben ausgefahrenem Zustand mit Blick auf ihre Innenseite;
- Figur 36: Einen vergrösserten Ausschnitt aus der linken Seitenwand des Ernte-Roboters mit ihrer Scherenkonstruktion auf die Innenseite gesehen;
- Figur 37: Einen Ausschnitt aus der linken Seitenwand des Ernte-Roboters von hinten gesehen, bei nach oben ausgefahrener Seitenwand;
- Figur 38: Die linke Seitenwand des Ernte-Roboters von hinten gesehen in nach unten zusammengefahrenem Zustand;
- Figur 39: Eine Explosionszeichnung aller Teile des Aufbaus;
- Figur 40: Eine Vierergruppe von Bäumen von oben gesehen, nach dem Einfahren des Roboters zwischen zwei Bäume, zum Abernten des hinteren Baumes rechts;
- Figur 41: Die Vierergruppe von Bäumen nach Figur 40 von oben gesehen, nach dem Einfahren des Roboters zwischen zwei Bäume, und nach dem Einfahren der Pflückstäbe zum Abernten des hinteren Baumes rechts;
- Figur 42: Die Vierergruppe von Bäumen nach Figur 40 von oben gesehen, nach dem Einfahren des Roboters zwischen zwei Bäume, und nach dem Einfahren der Pflückstäbe zum Abernten des hinteren Baumes rechts;

Der Ernteprozess gestaltet sich wie folgt: Der Ernte-Roboter wird in einen Viertel-Sektor des abzuerntenden Baumes hineingefahren. Dabei wird mit zwei in der Seite und Höhe versetzten Stabreihen an seinem Erntekopf in den Baum hineingefahren. Der Erntekopf wird zunächst auf der Gesamthöhe des Baumes in die Baumkrone eingefahren. Er verfährt während seinem Erntevorgang von oben nach unten. Mit grossen Ästen kollidierende Stäbe werden relativ zum Erntekopf gegen die Einfahrtsrichtung des Ernteroboters nach hinten ausgestossen. Damit wird ein Beschädigen der Stäbe oder der Äste verhindert. Jene Stäbe, die nicht kollidieren, reichen mit ihrer Gesamtlänge in die Baumkrone hinein. Angetrieben über einen Aktuator werden die Stäbe in eine Schwingung hin und her zueinander versetzt, vorzugsweise in eine vertikale Auf- und Ab-Schwingung, wenn die beiden Pflückstabreihen in zwei zueinander versetzten horizontalen Ebenen liegen. Zusätzlich können die Stäbe, angetrieben durch Rotation einer exzentrischen Masse an der Stabspitze um ihre Symmetrieachse oszillieren. Durch Überlagern der beiden Schwingungen durchlaufen die Stabspitzen in Abhängigkeit von der Steifigkeit der Stäbe und der Rotationsgeschwindigkeit der Exzentermassen alle Raumpunkte in innerhalb eines nach vorne öffnenden Kegels um die Stabspitzen in der jeweiligen Höhe ihrer Ebene. Durch das Zurückziehen der Stäbe nach hinten aus der Baumkrone hinaus durchlaufen die Stabspitzen schliesslich sämtliche Raumpunkte, welche sich innerhalb der beiden Stabreihen befinden. Damit werden sämtliche Baumfrüchte, welche sich zwischen den Stabreihen befinden und mit den Stäben kollidieren, vom Baum abgetrennt respektive geerntet. Jene Stäbe, welche oszillieren und vertikal auf einen Ast schlagen, werden durch den vorhandenen Widerstand und durch eine mechanische Vorrichtung ausgelenkt. Damit kann das Beschädigen von Stab und Ast verhindert werden. Baumfrüchte, welche rechts, links oder nach hinten fallen, werden durch Führungen am Ernte-Roboter in einen Auffangtrichter geleitet. Damit kann garantiert werden, dass keine Baumfrüchte verloren gehen. Die Baumfrüchte sammeln sich schliesslich in einem Auffangtrichter, von wo aus sie in Lattenkisten abgefüllt werden können.

Sobald alle Stäbe aus der Baumkrone ausgefahren wurden, bewegt sich der gesamte Erntekopf um drei Viertel der Distanz zwischen den beiden Stabreihen nach unten. Danach werden die Stäbe erneut in die Baumkrone hineingefahren und der Zyklus beginnt von neuem. Der Zyklus wird solange wiederholt, bis der Erntekopf unten auf Höhe des Baumstammes wieder aus dem Baum ausfährt. Ein Viertel bzw. ca. ein 90°-Sektor des Baumes ist damit abgeerntet. Es ist klar, dass ein derartiges Abernten auch mit um 90° gedreht angeordneten Pflückstäben realisiert werden könnte, wobei dann die Pflückstäbe von Mal zu Mal um ¾ ihres Abstandes seitlich versetzt würden und die Schwingung der Pflückstäbe nicht in vertikaler, sondern in horizontaler oder auch in einer schief zum Lot verlaufenden Richtung erfolgte. Wie auch immer, nach dem Abernten eines Sektors des Baumes kann der Ernte-Roboter den nächsten Viertel bzw. 90°-Sektor desselben Baumes oder eines anderen Baumes anfahren. Dies hängt im Wesentlichen vom Plantagenaufbau ab und wie die Bäume gepflanzt sind. Falls der Baum auf schiefem Gelände steht, kann der Ernte-Roboter mittels hydraulischer, pneumatischer oder elektrischer Aktuatoren den Erntekopf relativ zum Baum automatisch ins Lot ausrichten. Nach getaner Arbeit kann der Ernte-Roboter kompakt zusammengefahren werden. Damit wird das Fahren durch die Plantage oder auch auf einer Strasse vereinfacht. In dieser Konfiguration kann der Ernte-Roboter auch platzsparend parkiert werden.

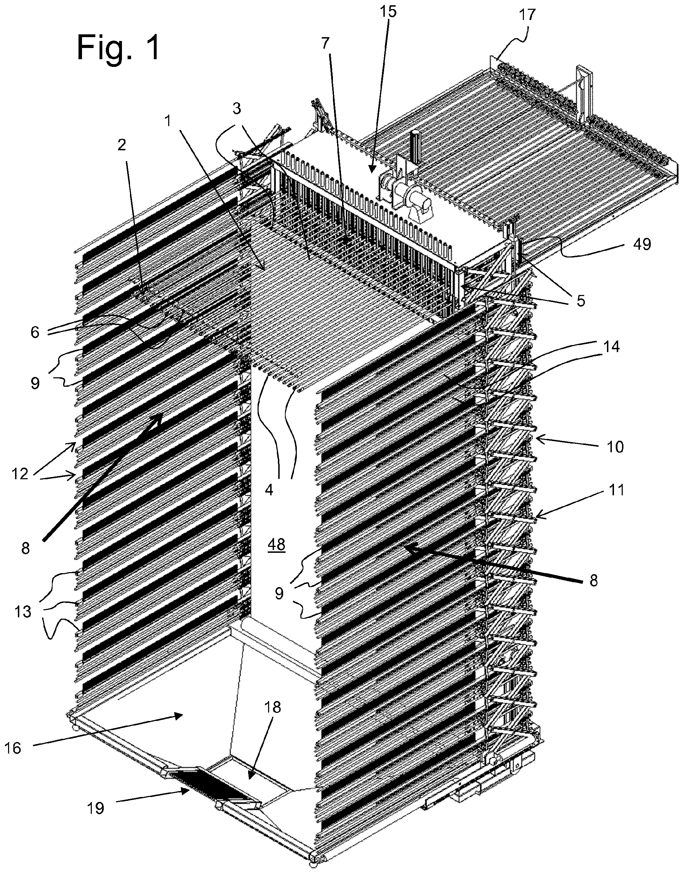

Im Folgenden wird ein Ausführungsbeispiel eines solchen Ernte-Roboters, das heisst einer realitätsnahen Konstruktion, anhand von Zeichnungen im Einzelnen vorgestellt und seine Funktionsweise wird erklärt. Die Figur 1 zeigt dabei den Ernte-Roboter von schräg vorne gesehen, im Zustand zum erstmaligen Einfahren in einen Baum mit den Pflückstäben 3,4 in ihrer obersten Lage. Der Ernte-Roboter weist mindestens zwei parallel zueinander verlaufende, abstehende und versetzte Reihen 1,2 von Pflückstäben 3,4 auf, die in ihrem hinteren Bereich in einer Halterung 5 in einem Erntekopf 15 gehalten sind. Im gezeigten Beispiel liegen die Pflückstäbe also in zwei horizontalen Ebenen. Diese Pflückstäbe 3,4 können nun kollektiv mit ihren freien vorderen Enden 6 in einen Baum hineingeschoben werden, indem der gesamte Ernte-Roboter in Bezug auf den Baum gegen den Baumstamm hin fährt. Dazu kann er auf einem Fahrgestell montiert sein oder an einen Traktor oder an ein Hanggeräte-Trägerfahrzeug angebaut sein. Bevor der Ernte-Roboter mit seinen Pflückstäben 3,4 in einen Baum hineingefahren wird, wird er an Ort und Stelle mittels Hydraulikantrieben, pneumatischen oder elektrischen Aktuatoren ins Lot gerichtet, sodass ein Neigung um die Längs- und oder Querrichtung (Pitch und Roll) kompensiert wird. Dazu ist der Ernteroboter auf einem Chassis aufgebaut, welches um zwei sich kreuzende Achsen schwenkbar auf einem Trägerfahrzeug montierbar ist. Das Aufrichten ins Lot ist deshalb wichtig, weil in vielen Fällen das Gelände, auf dem die abzuerntenden Bäume stehen, geneigt ist. Entsprechend muss für jedes Hineinfahren in einen Baum zunächst sichergestellt werden, dass der Ernteroboter lotrecht steht. Dieses Lotrechtstellen erfolgt automatisch, indem Sensoren die Neigung des Ernteroboters ermitteln und ihn entsprechend mittels der dafür vorgesehenen Hydraulikantriebe oder der pneumatischen oder elektrischen Aktuatoren automatisch ins Lot aufrichten. Das Aufrichten kann indessen auch von Hand gesteuert mittels dieser Antriebe erfolgen. Das Hineinfahren der Pflückstäbe in den Baum hinein kann auch erfolgen, indem mit dem Fahrzeug an den Baum herangefahren wird, bis die Pflückstäbe anfangen, Äste des Baumes zu berühren. Dann wird das Fahrzeug angehalten.

Im Weiteren werden dann die Pflückstäbe 3,4 mit ihren freien Enden 6 in einen Baum hineingeschoben, indem sie zu einem Aufbau gehören, der auf dem Fahrzeug aufgebaut ist, wobei dieser Aufbau einen oder mehrere hydraulisch, pneumatisch oder elektrisch betätigbare Ausfahr- und Einfahraktuatoren einschliesst, sodass das Ein- und Ausfahren in den Baum durch dieselben mittels einer Relativbewegung zum Fahrzeug erfolgt. Die dann horizontal abstehenden Pflückstäbe 3,4 sind mit ihren vorderen Enden 6 gegeneinander schwenkbar und hernach wieder voneinander wegschwenkbar. Sie können als Ganzes in jedem Schwenkzustand mittels eines im Erntekopfe 15 verschiebbaren Stabausziehers 49 aus dem Baum herausgezogen werden. Bei diesem Zurückfahren, wenn die beiden Reihen 1,2 von Pflückstäben 3,4 zusammengeschwenkt sind oder oszillieren und gleichzeitig kollektiv aus dem Baum heraus gezogen werden, werden die Früchte bzw. Oliven oder Nüsse von ihren Stängeln abgezogen und sind hernach zwischen der oberen Reihe 1 und unteren Reihe 2 der Pflückstäbe 3,4 gefangen oder sie werden durch die schwingenden Pflückstäbe 3,4 von den Stängeln abgeschüttelt. Durch Öffnen und Oszillieren der Pflückstäbe 3,4 fallen die abgeernteten Früchte nach unten in den Auffangtrichter 16. Die hier sichtbaren Seitenwände 8 zusammen mit einer hinten angebrachten Blache 48 oder einem Netz sorgen dafür, dass seitlich oder nach hinten wegspickende oder wegfallende Früchte bzw. Oliven nicht verloren gehen. Sie prallen an den Innenseiten dieser Wände 8 und an der Blache/Netz 48 ab und fallen hernach ebenfalls in den Auffangtrichter 16. Die einzelnen Pflückstäbe 3,4 jeder Reihe 1,2 sind in ihrem hinteren Bereich translatorisch gegen eine Federkraft verschiebbar in einer Halterung 5 am Erntekopf 15 gelagert. Jeder Pflückstab 3,4 kann daher gegen diese Federkraft individuell nach hinten geschoben werden, sodass er in den Rahmen 17 hinein geschoben wird. Jeder Pflückstab 3,4 innerhalb einer Reihe 1,2 kann daher beim Einfahren der Pflückstäbe 3,4 in einen Baum, wenn er mit seinem vorderen Ende 6 an einem Ast anschlägt und durch denselben gestoppt wird, beim weiteren Hineinfahren des Ernteroboters in den Baum hinein nach hinten ausweichen. Er wird in seiner Halterung 5 relativ zum Erntekopf 15 nach hinten geschoben, gegen eine Federkraft. Desweitern können die Pflückstäbe 3,4 in allen Richtungen auslenkbar gelagert sein, sodass sie bei Auftreffen mit ihrer Spitze auf ein Hindernis zur Vermeidung einer Verkrümmung oder eines Bruches ablenkbar sind. Wenn sie also wie zunächst gezeigt in vertikaler Richtung schwenkbar sind, so können sie zusätzlich auch in einem gewissen Schwenkbereich horizontal schwenkbar gelagert sein, damit sie in allen Richtungen ausweichen können, wenn sie mit ihrer Spitze auf ein Hindernis auftreffen, indem sie in diesem Fall mit der Spitze in einer Richtung quer zur Verlaufrichtung des Pflückstabes abgleiten können. Alle nicht auf ein Hindernis auftreffenden Pflückstäbe 3,4 werden weiter in den Baum hineingeschoben.

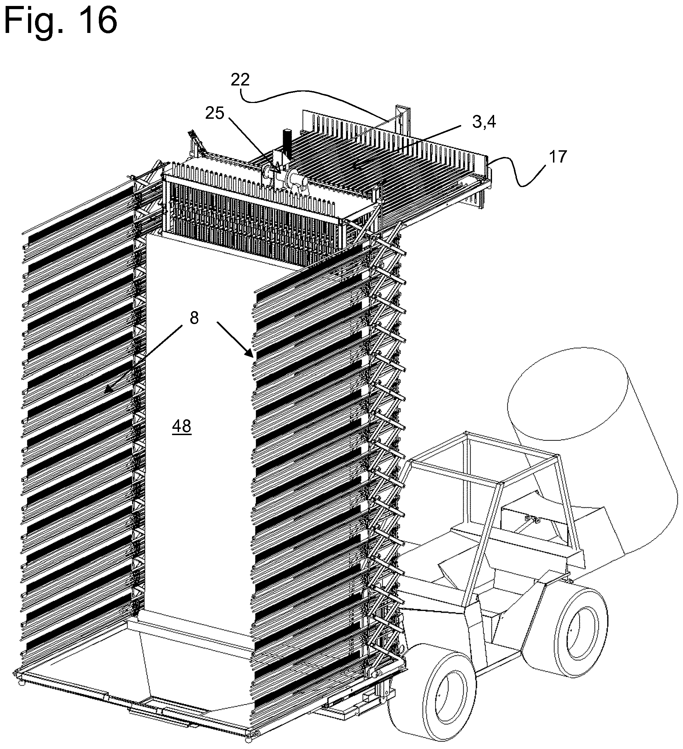

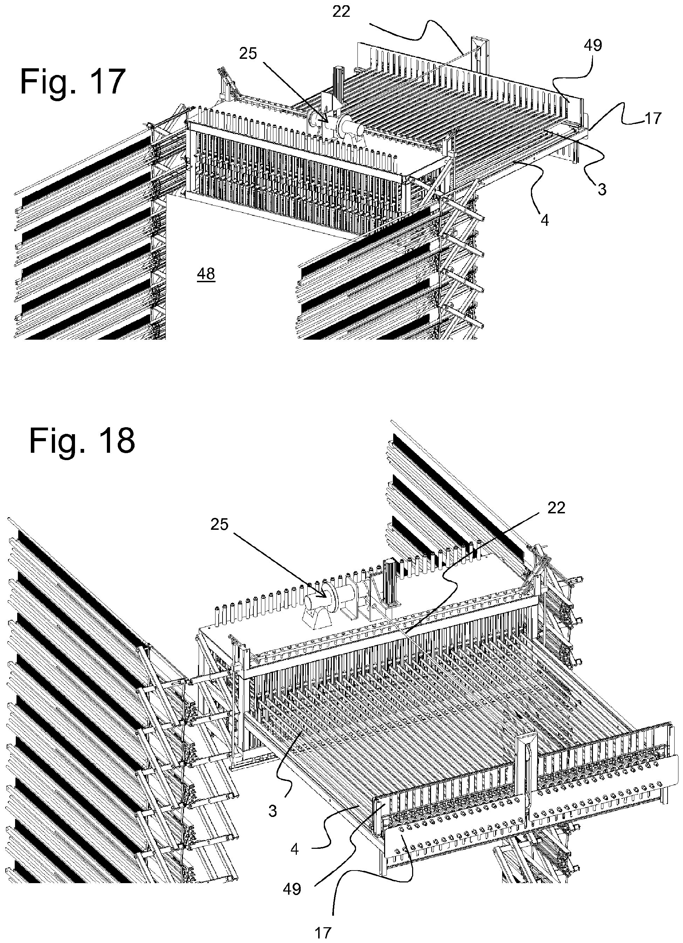

Der Ernte-Roboter wird soweit in einen Baum hineingefahren, bis die vorderen Enden 6 der Pflückstäbe 3,4 nahe beim Baumstamm enden. Hernach werden die Pflückstäbe 3,4 durch einen Antrieb aktiv auf und ab geschwenkt. Die beabstandeten Reihen 1,2 von Pflückstäben 3,4 sind also quer zu der von ihnen gebildeten Gitterebene verschiebbar bzw. schwenkbar gelagert. Im gezeigten Beispiel erstreckt sich diese Querrichtung in vertikaler Richtung. Gleichzeitig oder anschliessend an ein Zusammenschwenken werden die Pflückstäbe 3,4 kollektiv rückwärts aus dem Baum herausgezogen, wobei alle Pflückstäbe 3,4 mittels eines Stabausziehers 49 gegen die Kraft der wirkenden Federkräfte aus dem Baum herausgezogen werden. Nach Veränderung der Höhenlage der Pflückstab-Reihen 1,2 werden die Pflückstäbe 3,4 aufgrund der wirkenden Federkräfte wieder gegenüber dem Erntekopf 15 in der Halterung 5 nach vorne geschoben und nehmen schliesslich wieder ihre Ausgangslage ein, wie diese in der Figur 1 gezeigt ist. Die Pflückstäbe 3,4 am Ernte-Roboter sind in einem Bereich zwischen ca. einem Fünftel und einem Drittel ihrer Länge, welche zwischen 1.50 m und 2.50 m misst, von ihrem hinteren Ende 7 aus quer zu ihrer Verlaufrichtung federnd gelagert, und ihre hinteren Enden 7 sind motorisch in Richtung des Federweges auf und ab verschiebbar, sodass die vorderen Enden 6 um einen grösseren Verschiebeweg schwenkbar sind, und sodass sie beim Auftreffen auf ein Hindernis durch die gefederte Lagerung in Richtung der Schwenkebene nachgiebig gelagert sind, wie das noch anhand der Figuren 16 und 17 ersichtlich wird.

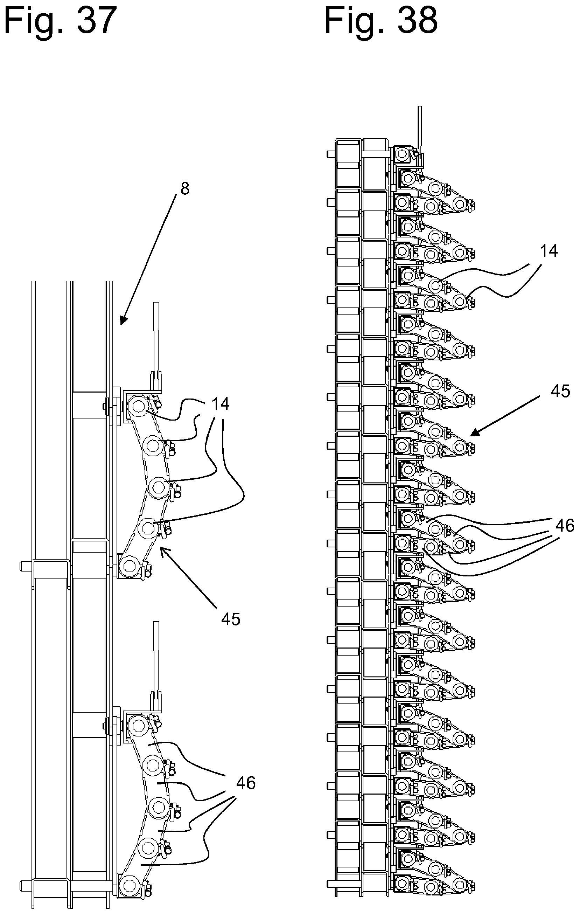

Der Erntekopf 15 ist insgesamt höhenverstellbar am Ernte-Roboter angebaut. Hierzu dienen beidseits des Ernte-Roboters angebaute Scherenkonstruktionen 11. Diese Scherenkonstruktionen 11 können allein zur Führung dienen, indem der Erntekopf 15 mittels eines eigenen Antriebs in der Höhe stufenlos verstellbar ist, oder aber die Scherenkonstruktionen 11 selbst bilden den Antrieb für die Höhenverstellung des Erntekopfes 15, indem die Enden der vorderen und hinteren Gelenke der Scheren an einem oder mehreren Orten mit horizontal verlaufenden Hydraulikzylindern, Pneumatikzylindern oder elektrischen Aktuatoren durchsetzt sind, deren Kolben ausfahrbar sind, sodass die Scherenkonstruktionen 11 als Hebescheren wirken und aufwärts und abwärts bewegbar sind. Die Scherenkonstruktionen 11 tragen auf jeder Seite des Ernte-Roboters je eine aus mehreren horizontalen, voneinander beabstandeten und vorne freien Latten 9 gebildete Seitenwand 8. Diese Latten 9 erstrecken sich von ihrem hinteren Ende 10 aus nach vorne. Sie sind jeweils an einem hinteren und vorderen Gelenk einer Scherenkonstruktion 11 befestigt. Vorne bleiben sie frei schwebend, bis zu ihrem vorderen Ende. Sie bilden also sozusagen Finger, die dank ihres vorderen freien Endes in das Geäst und in die Zweige eines Baumes hineinfahrbar sind, sehr ähnlich wie die Pflückstäbe 3,4. Wenn die Scherenkonstruktionen 11 ganz nach oben ausgefahren sind, sowie in Figur 1 gezeigt, entstehen mehrere Zentimeter grosse Spalten 12 zwischen den einzelnen Latten 9. Um diese Spalten 12 möglichst auszufüllen, sind Stäbe 14 aus Metall oder einem geeigneten Kunststoff in diesen Spalten 12 parallel zu den Latten 9 verlaufend angeordnet. Ausserdem können die Kanten der Latten 9 mit Bürsten versehen sein, sodass also deren Borsten rechtwinklig zu den Latten 9 von diesen nach oben und unten abstehen. Die Stäbe 14 sind in ihrem hinteren Bereich an Gelenkbändern gehalten, sodass beim Zusammenfahren der Scherenkonstruktionen 11 die parallel zueinander verlaufenden Stäbe 14 im Querschnitt durch alle diese Pakete von Stäben hindurch diese zu einem bogenförmigen Gebilde zusammengeschwenkt werden, das heisst die als Gelenkband ausgebildete Halterung lässt sich zusammenschwenken, und durch eine solche Verschwenkung ihrer Glieder weicht sie ins Innere der Seitenwand aus, wie das anhand der Figuren 37 und 38 ersichtlich ist. Sowohl die Latten 9 wie auch die Stäbe 14 sind nach hinten hinaus federbelastet verschiebbar, genauso wie die Pflückstäbe 3,4, zum Beispiel mittels Gummizügen, die beim nach hinten Verschieben gespannt werden, und nach Wegfall einer nach hinten schiebenden Kraft die Latten 9 und die Stäbe 14 wieder nach vorne schieben. Unterhalb der beiden Seitenwände 8 erkennt man den Auffangtrichter 16, in welchen die abgeernteten Früchte von den Pflückstäben 3,4 aus hineinfallen, sodass sie darunter durch ein Loch 18 in eine Kiste oder einen Sack aufgefangen werden können. Die Ausnehmung 19 im Rahmen des Auffangtrichters 16 ist mit Bürsten versehen und dazu bestimmt, den Baumstamm eines Baumes aufzunehmen, wenn der Ernte-Roboter in einen Baum hineingefahren wird und nahe an dessen Stamm gefahren wird. Dieser ganze Auffangtrichter 16 kann über einen Hydraulikzylinder, einen Pneumatikzylinder einen elektrischen Aktuator kombiniert mit einem Kettenzug in seiner Höhe verstellbar ausgeführt sein. Bei unterschiedlichen Neigungen des Geländes, auf dem die abzuerntenden Bäume stehen, kann der Auffangtrichter 16 somit in der richtigen Höhe unter einem Baum platziert werden und kollidiert nicht mit dem Gelände. Das wäre sonst vorallem dann der Fall, wenn ein Baum auf der Fallinie des Geländes von unten her angefahren wird.

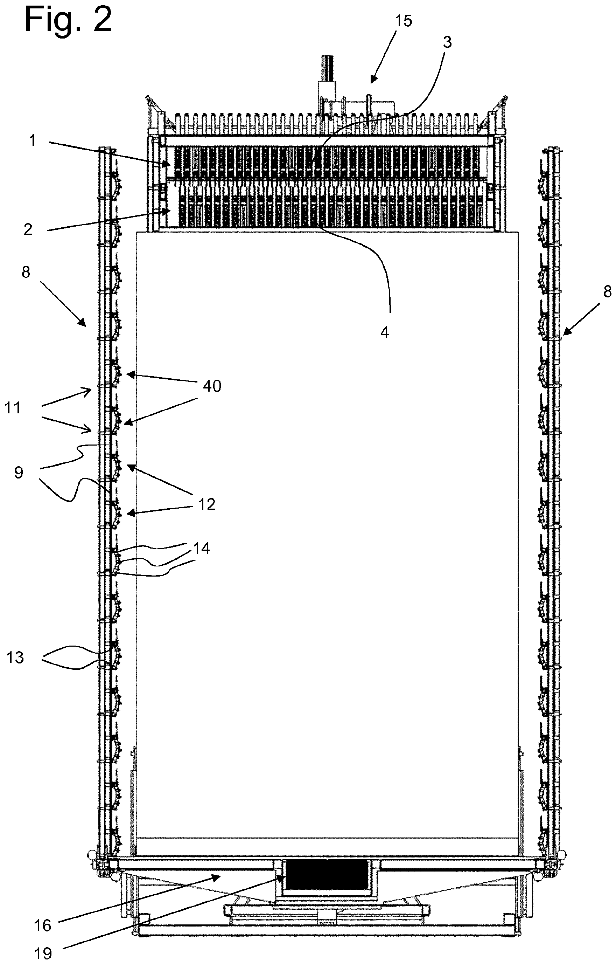

Die Figur 2 zeigt diesen Ernte-Roboter in einer Ansicht von vorne gesehen. Man erkennt hier die beiden Seitenwände 8, die sich ab den seitlichen Rändern des Auffangrichters 16 nach oben erstrecken, und im oberen Bereich den Erntekopf 15 mit den beiden Reihen 1,2 von Pflückstäben 3,4. In dieser Ansicht erkennt man die Rundstäbe 14 zwischen den Latten 9, welche die Zwischenräume bzw. die Spalten 12 zwischen den Latten 9 annähernd ausfüllen. Diese Rundstäbe 14 sind am hinteren Ende in zwei Gelenkbändern am vorderen und hinteren Ende einer Scherenkonstruktion 11 gehalten, welche zu einem leichten Bogen gekrümmt ist. Je stärker die Scherenkonstruktion 11 nach unten zusammengefahren wird, umso schmaler werden die Spalten 12 zwischen den horizontal verlaufenden Latten 9 und umso stärker werden die Gelenkbänder bzw. ihre Glieder zusammengeschwenkt, sodass die von ihnen gebildeten Bogen 40 einen immer kleineren Radius annehmen. Entsprechend bilden sich die in der Zeichnung sichtbaren Bögen aus, wobei die Rundstäbe 14 entsprechend senkrecht zur Blattebene verlaufen und je einen am vorderen Ende freien Finger bilden. Insgesamt kann mit diesen Seitenwänden 8 in verschiedenen Einstellhöhen in einen Baum hineingefahren werden. Die vorne freien Latten 9 und die dazwischen angeordneten, vorne freien Rundstäbe 14 können wie Finger ins Ast- und Zweigwerk des Baumes hineingefahren werden und nötigenfalls auch aufgrund ihrer Steifigkeit und Biegsamkeit den Ästen und Zweigen um einen bestimmten Bereich seitwärts ausweichen, wozu sie am freien Ende abgerundet sind. Die Längsränder 13 der Latten 9 können ausserdem mit quer zu den Latten 9 verlaufenden Bürsten aus elastisch nachgiebigen Ruten ausgerüstet sein, zum weitgehenden Schliessen der Wände 8 in nach oben ausgefahrenem Zustand der Scherenkonstruktionen 11. Wenn die Latten 9 oder Rundstäbe 14 auf ein hartes Hindernis, etwa auf einen starken Ast treffen, dem sie nicht seitlich ausweichen können, werden sie analog wie die Pflückstäbe 3, 4 beim Auftreffen durch dieses Hindernis und beim weiteren Einfahren des Ernteroboters in den Baum hinein translatorisch am Ernte-Roboter nach hinten geschoben. Die Rundstäbe 14 sowie die Latten 9 sind in dieser Weise translatorisch gegen die Federkraft von Gummibändern verschiebbar. Beim anschliessenden Herausfahren des Ernteroboters aus dem Baum werden die Rundstäbe 14 und die Latten 9 kraft dieser Gummibänder wieder in ihre Ausgangspositionen zurückgeschoben. Durch diese gefederte Verschiebefreiheit wird eine Beschädigung der Latten 9 und der Rundstäbe 14 verhindert.

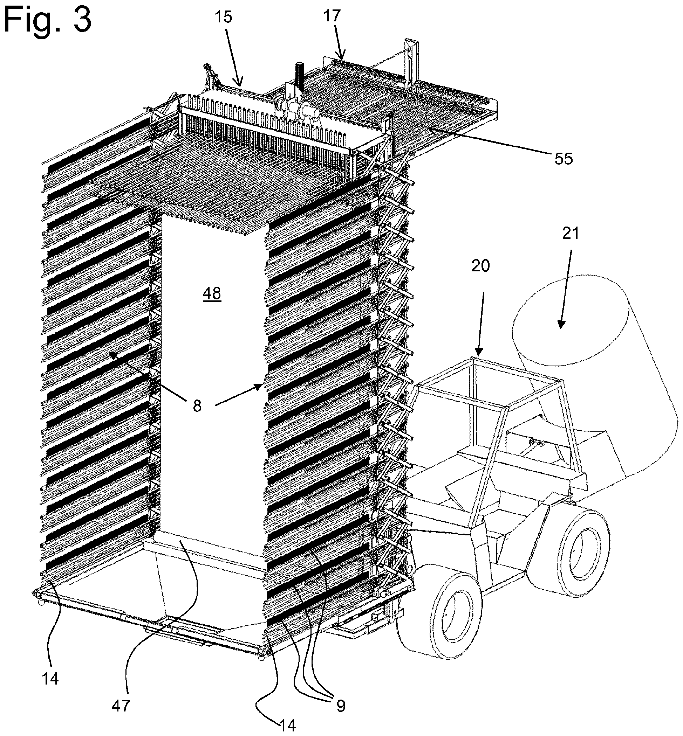

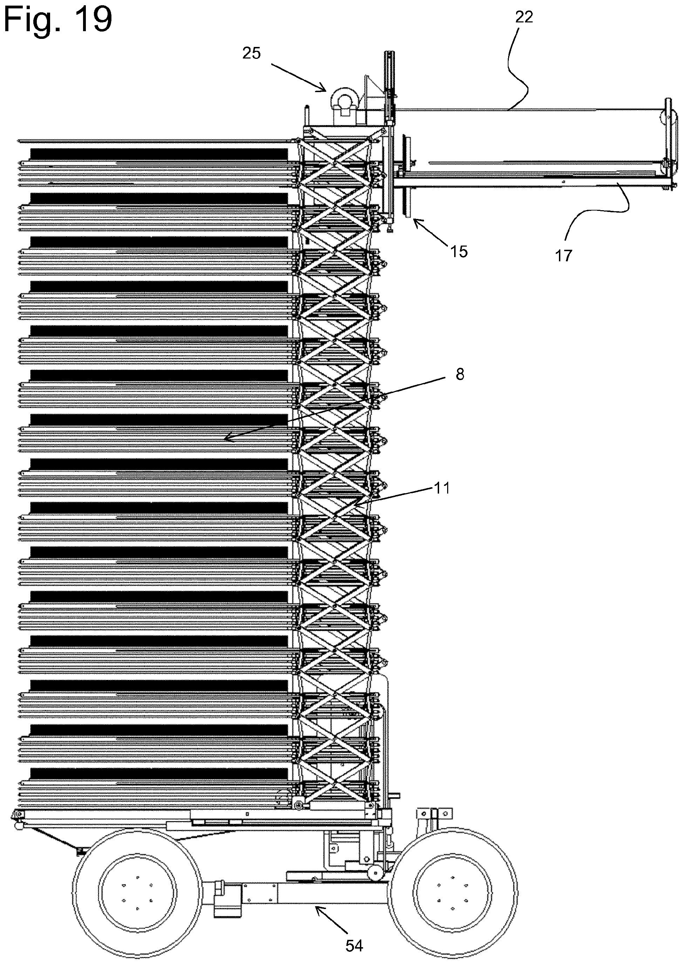

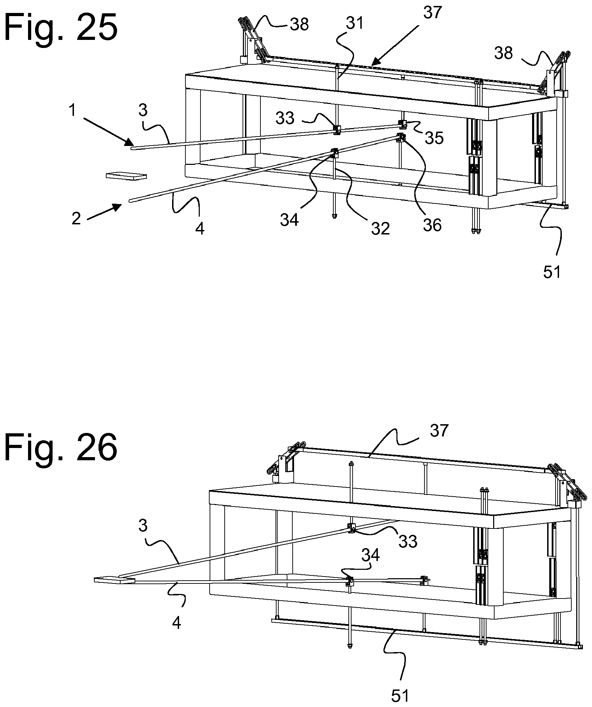

Die Figur 3 zeigt diesen Ernte-Roboter von schräg vorne gesehen. Wie hier gezeigt ist er an die Front eines Hanggeräte-Trägerfahrzeuges 20 angebaut, welcher an seinem Heck einen Kompressor 21 zur Versorgung der Aktuatoren im Erntekopf 15 mit Pressluft dient. Diese ganze Einheit am Heck wiegt ca. 250kg und dient auch als Gegengewicht zum vorne angebauten Ernte-Roboter. Angetrieben wird der Kompressor 21 durch die hintere Zapfwelle des Hanggeräte-Trägerfahrzeuges 20. Die vordere Zapfwelle wird indessen für die Hydraulikpumpe der Hydraulikantriebe für die Hebescheren, für das Aufrichten des gesamten Ernteroboters ins Lot sowie für die Höhenverstellung des Auffangtrichters 16 genutzt. Die Pressluft aus dem Kompressor dient einerseits zum Antreiben des Pneumatikzylinders, welcher ein Querprofil 37 (Figuren 25 und 26) am Erntekopf 15 auf und ab in Bewegung setzt, um die Pflückstäbe 3,4 zum Oszillieren zu bringen. Andererseits dient die Pressluft zum Betreiben eines pneumatischen oder elektrischen Seilzugmotors 25 (Figur 19) und der Exzentermassen an den vorderen freien Enden 6 der Pflückstäben 3,4. Gegen hinten erkennt man in Figur 3 den Rahmen 17, der wie eine Schublade in den Erntekopf 15 hinein verschiebbar ist. Innerhalb des Rahmens 17 erkennt man eine Vielzahl von Pneumatikschläuchen 55, die wie eine Feder aufgewickelt sind und damit in verschiedene Längen ausziehbar sind. Sie sind am hinteren Ende am Rahmen 17 über einen Anschluss mit einem Pneumatik-Schlauch für die Pressluft aus dem Kompressor 21 verbindbar. An ihren vorderen Enden sind sie mit den hinteren Enden der Pflückstäbe 3,4 verbunden, zum Einpressen von Luft in das Innere der Pflückstäbe 3,4, die als Rohre ausgebildet sind. Die am vorderen Ende der Pflückstäbe 3,4 ankommende Pressluft bringt die dort drehbar gelagerten Exzenter zum Rotieren, sodass die Pflückstäbe 3,4 nicht nur auf und ab oszillieren, sondern je nach Pressluftdruck und somit variierbarer Rotationsgeschwindigkeit der Exzenter innerhalb eines Kegels als Umhüllende schwingend rotieren. Ausserdem kann das Hanggeräte-Trägerfahrzeug 20 mit seiner vorderen Zapfwelle als Energiequelle zum Antreiben einer zusätzlichen Hydraulikpumpe verwendet werden, welche die verschiedenen Hydraulikzylinder des Ernteroboters versorgen. Die Hydraulikzylinder dienen unter anderem zum nach oben Ausfahren der Scherenkonstruktionen 11 bzw. der Hebescheren und somit des Erntekopfes 15 und der Seitenwände 8. In der gezeigten Perspektive erkennt man auch die horizontalen Latten 9 der Seitenwände 8 sowie die ebenfalls horizontal verlaufenden Rundstäbe 14. Damit die geernteten Oliven nicht nach hinten gegen den Traktor hin fallen können, ist eine Rolle 47 mit einer Blache 48 oder einem Netz eingebaut. Beim nach oben Fahren des Erntekopfes 15 wird die Blache 48 oder das Netz von der federbelasteten Rolle 47 abgerollt, sodass diese beim Zusammenfahren der Scherenkonstruktionen 11 die Blache 48 oder das Netz durch die Feder wieder aufrollt. Die Blache 48 oder das Netz bildet im ausgerollten Zustand eine Wand, welche verhindert, dass die Oliven nach hinten fallen können. Als Alternative zur Blache 48 oder einem Netz wären auch aufziehbare Lamellen möglich, ähnlich von Storenlamellen. Alle oben beschriebenen Funktionen können indessen als Alternative auch mittels eines hydraulischen oder elektrischen Antriebes bewerkstelligt werden. Je nachdem treibt die Zapfwelle des Fahrzeuges eine Hydraulikpumpe an, oder für pneumatische Funktionen einen Kompresser zur Bereitstellung von Druckluft in einem gesonderten Druckbehälter am Ernteroboter. Bei elektrischen Antrieben kann die Fahrzeugbatterie als Energiequelle genutzt werden, und wenn diese nicht ausreichend sein sollte, kann die Zapfwelle einen zum Ernteroboter gehörenden Generator antreiben, der eine gesonderte Batterie entsprechender Kapazität auflädt.

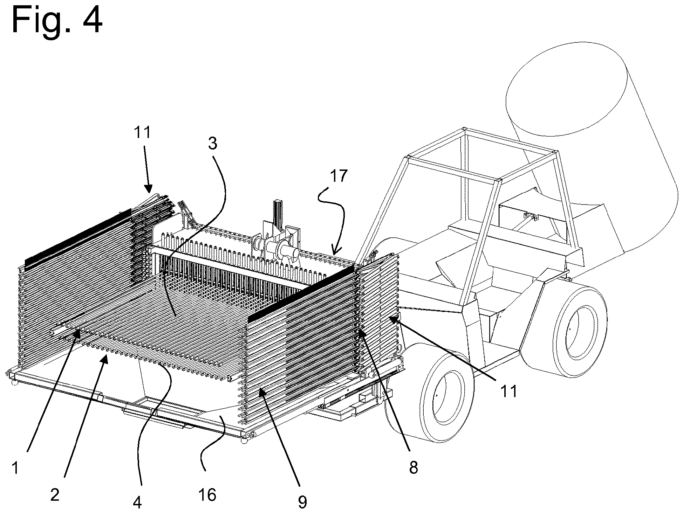

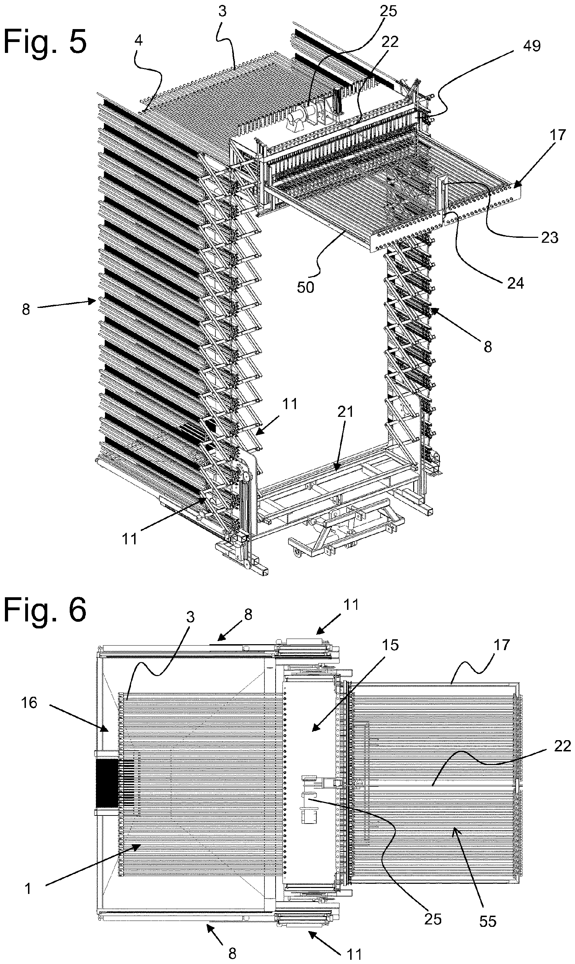

In Figur 4 ist eine Ansicht des Ernte-Roboters von schräg vorne gesehen gezeigt, mit nach unten zusammengefahrenem Ernte-Roboter. Aus der Position des Ernteroboters wie in Figur 3 gezeigt, also mit ganz nach oben ausgefahrenem Erntekopf 15, werden die beiden Reihen 1,2 von Pflückstäben 3,4 in einen Baum hineingefahren und unter oszillierender Schwenkung rückwärts aus dem Baum herausgefahren, wozu spezielle hier nicht sichtbare Stabauszieher 49 (Fig. 5) dienen. Dabei streifen und vibrieren die Pflückstäbe die Früchte vom Baum und sie fallen in den Auffangtrichter 16. Das Rückwärtsfahren wird fortgesetzt bis die Pflückstäbe 3,4 ganz aus dem Baum herausgefahren sind, dann wird der Erntekopf 15 um ca. ¾ des Abstandes zwischen den beiden Reihen 1,2 der Pflückstäbe 3,4 nach unten gefahren und sie werden erneut in den Baum hineingefahren und unter Oszillation wieder aus ihm herausgefahren, usw., bis der ganze Ernte-Roboter sich so präsentiert wie in Figur 4 gezeigt. Die Scherenkonstruktionen 11 sind jetzt komplett nach unten zusammengefahren und die Latten 9 liegen fast oder ganz aneinander auf. Die beiden Reihen 1,2 von Pflückstäben 3,4 befinden sich in ihrer untersten Position zum Ausfahren aus einem Baum. In dieser zusammengefahrenen Position des Ernteroboters, mit schubladenartig nach vorne in den Erntekopf eingeschobenem Rahmen 17, kann mit dem Hanggeräte-Trägerfahrzeug 20 auch auf einer öffentlichen Strasse gefahren werden, denn der Ernte-Roboter kann zum Beispiel auf eine Breite von 2.50m ausgelegt sein, sodass keine Überbreite nötig ist. Für das Abernten von grösseren Bäumen kann er freilich breiter ausgelegt sein, wodurch dann das Verkehren auf öffentlichen Strassen eine Ausnahmebewilligung nötig macht.

Die Figur 5 zeigt eine Ansicht des Ernte-Roboters schräg oben und hinten gesehen. Wie man in dieser Ansicht erkennt, sind auf jeder Seite des Ernte-Roboters je zwei Scherenkonstruktionen 11 als Hebescheren auf dem Trägerrahmen 21 des Ernte-Roboters aufgebaut, zwischen die sich die hinteren Enden der Seitenwände 8 erstrecken. Der nach hinten ragende Rahmen 17 ist ähnlich wie eine Schublade manuell nach vorne verschiebbar. Der Rahmen 17 bildet die Aufnahme für die Führung 50, welche den Stabauszieher 49 beim Ausziehen der Reihen 1,2 der Pflückstäbe 3,4 nach hinten führt. Der Stabauszieher 49 wird mittels eines Seilzuges 22 betätigt, der am hinteren Ende des Rahmens 17 über zwei Umlenkrollen 23, 24 läuft und vorzugsweise von einem pneumatischen Antriebsmotor 25 mit Pulley angetrieben ist. Indessen sind auch hydraulische oder elektrische Antriebslösungen realisierbar. Dieser Rahmen 17 nimmt die beim Hineinfahren der beiden Reihen 1,2 von Pflückstäben in einen Baum die von diesem zurückgeschobenen Pflückstäbe 3, 4 auf. Diese werden dann gegen eine Federkraft in den Rahmen 17 zurückgeschoben. Zum Abernten der zwischen den Pflückstäben 3,4 gefangenen oder von ihnen losgeschlagenen oder abgestreiften und nach unten gefallenen Früchte werden die Pflückstäbe 3,4 mittels dieses Stabausziehers 49 überlagert zu ihrer Ozillations- und Rotationsbewegung nach hinten in den Rahmen 17 gezogen, gegen wirkende Federkräfte, bis sie ganz zurückgezogen sind und sich somit im Rahmen 17 befinden. Dann wird der Erntekopf 15 ein stückweit in der Höhe verschoben und der Stabauszieher 49 fährt wieder nach vorne, wodurch die die Pflückstäbe 3,4 kraft von wirksamen Federn nach vorne geschoben in den Baum hinein geschoben werden, und wonach die Oszillation und Rotation der Pflückstäbe 3,4 von neuem initiiert wird.

Die Figur 6 zeigt eine Ansicht des Ernte-Roboters von oben gesehen, im Grundriss. Auf der linken Seite der Zeichnung erkennt man die Pflückstäbe 3 der oberen Reihe 1 von Pflückstäben 3, mit den sie seitlich begrenzenden Seitenwänden 8 über dem Auffangtrichter 16 und den ganz aussen angeordneten Scherenkonstruktionen 11. In der Mitte befindet sich der Erntekopf 15, in welchem die Pflückstäbe 3,4 gehaltert sind. Rechts ist der Rahmen 17 gezeigt, über welchen die Pneumatikschläuche 55 verlaufen, zur Versorgung der Pflückstäbe 3,4 mit Pressluft.

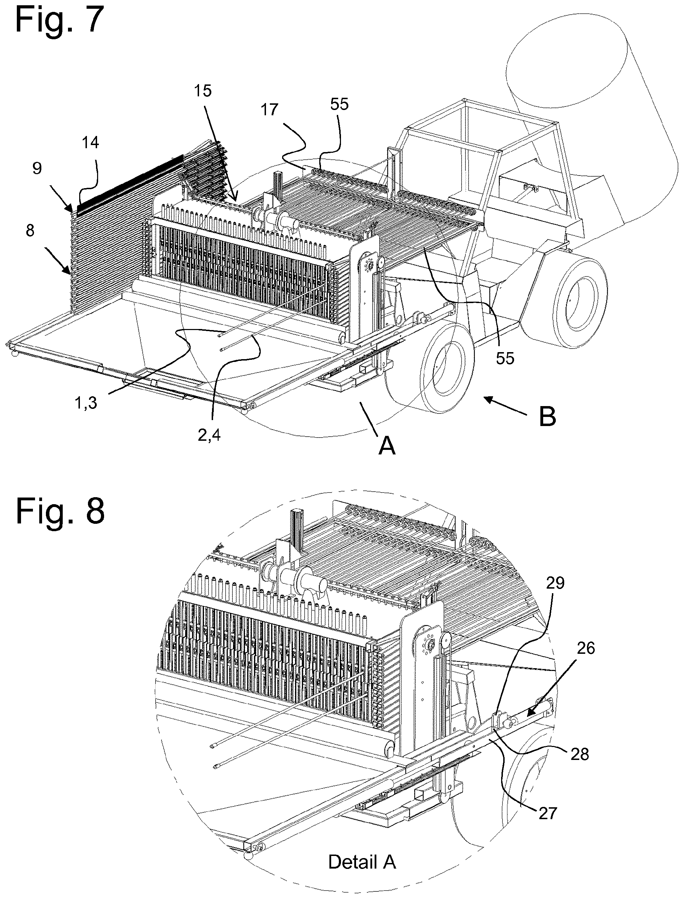

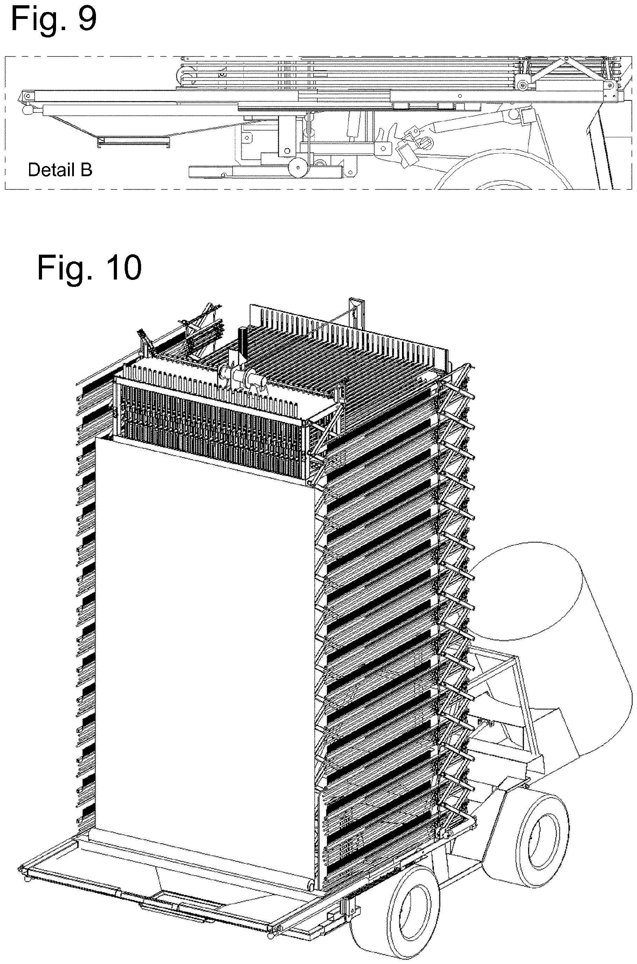

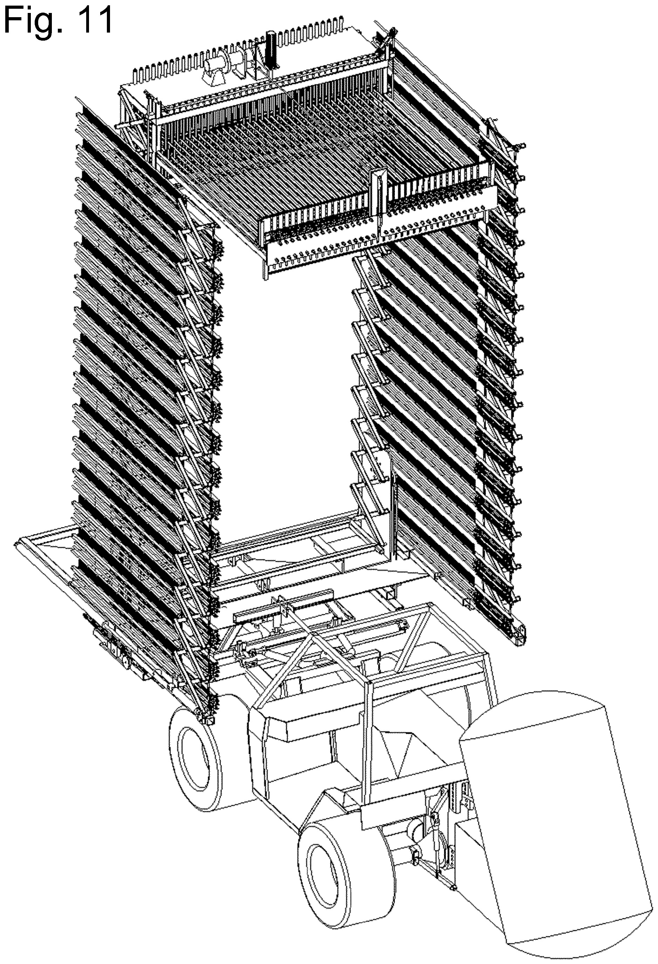

Die Figur 7 gewährt eine weitere Ansicht des Ernte-Roboters von schräg vorne und oben gesehen, mit fehlender linker Seitenwand und mit den Pflückstäben bis auf zwei, nämlich dem Pflückstab 3 der oberen Reihe 1 und dem Pflückstab 4 der unteren Reihe 2, während die restlichen Pflückstäbe ausgeblendet sind. Wenn immer ein einzelner Pflückstab 3,4 auf einen starken Widerstand stösst, etwa wenn er mit seinem vorderen Ende auf einen dicken Ast trifft, so wird er in seiner Halterung im Erntekopf 15 gegen die Kraft einer Feder nach hinten und somit in den Rahmen 17 geschoben, so weit wie je nach Situation nötig. Es kann also sein, dass nach dem Hineinfahren des Ernte-Roboters in einen Baum sich ein paar Pflückstäbe 3,4 mehr oder weniger stark in den Rahmen 17 zurückgeschoben befinden. Die Seitenwände 8, das heisst ihre Latten 9 und Rundstäbe 14 sind vorne abgerundet und in jeder Richtung biegsam, aber doch relativ steif. Sie weichen beim Auftreffen auf ein Hindernis demselben aus, sei es dass sie sofort aufgrund ihrer Biegsamkeit seitlich ausweichen, oder dass sie aufgrund ihrer Stabilität ein Hindernis in Form eines Astes oder Zweiges zunächst etwas wegschieben und dann von diesem Ast oder Zweig abgleiten. Die Latten 9 und Rundstäbe 14 der Seitenwand 8 können durch ein Hindernis wie etwa einen Ast analog wie die Pflückstäbe 3,4 nach hinten geschoben werden. Die Latten 9 und Rundstäbe 14 der Seitenwände 8 sind mittels Gummizügen gefedert und kehren in ihre Ausgangsstellung zurück, sobald diese durch das Fehlen eines Widerstandes zurückfedern können. Unterhalb der Zeichnung ist in Figur 8 der kreisrunde Abschnitt A aus Figur 7 noch vergrössert dargestellt und man erkennt den Antrieb 26 für die anzubauende Scherenkonstruktion 11, wie diese auch auf der anderen Seite des Ernte-Roboters angebaut ist. In einem liegenden Vierkantrohr 27 ist ein weiteres, kleineres Vierkantrohr 28 verschiebbar gelagert. An dessen nach oben ragenden Laschen 29 kann die unterste Scherenstrebe schwenkbar angebaut werden, und gegenüber, am anderen Ende des stationären Vierkantrohres 27 wird dann die zugehörige Scherenstrebe ebenfalls schwenkbar angebaut, welche die eben erwähnte um eine gemeinsame Achse kreuzt. Durch das Ein- und Ausfahren des kleineren Vierkantrohres 28 im grossen Vierkantrohr 27, zum Beispiel mittels einer Gewindestange, hydraulisch oder pneumatisch, kann die Scherenkonstruktion 11 nach oben ausgefahren und wieder eingefahren werden. Auf der hinteren Seite des Erntekopfes 15 erkennt man in Figur 7 den Rahmen 17, innerhalb welchem die nach Art einer Zugfeder ausziehbaren Pneumatikschläuche 55 untergebracht sind, die vom Kompressor 21 mit Pressluft für das Antreiben der Exzenter auf den Spitzen der Pflückstäbe 3,4 versorgt werden. Die Figur 9 zeigt das Detail B in Figur 7 vergrössert dargestellt, nämlich einen Blick senkrecht auf die linke Fahrzeugseite mit seinen Elementen zum Halten, Höhenverstellen und seitlichen Schwenken des ganzen angedockten Roboters. Und so präsentiert sich der Ernteroboter in Figur 10 mit eingefahrenen, das heisst zurückgezogenen Pflückstäben in einer Ansicht von schräg vorne und in Figur 11 von schräg hinten.

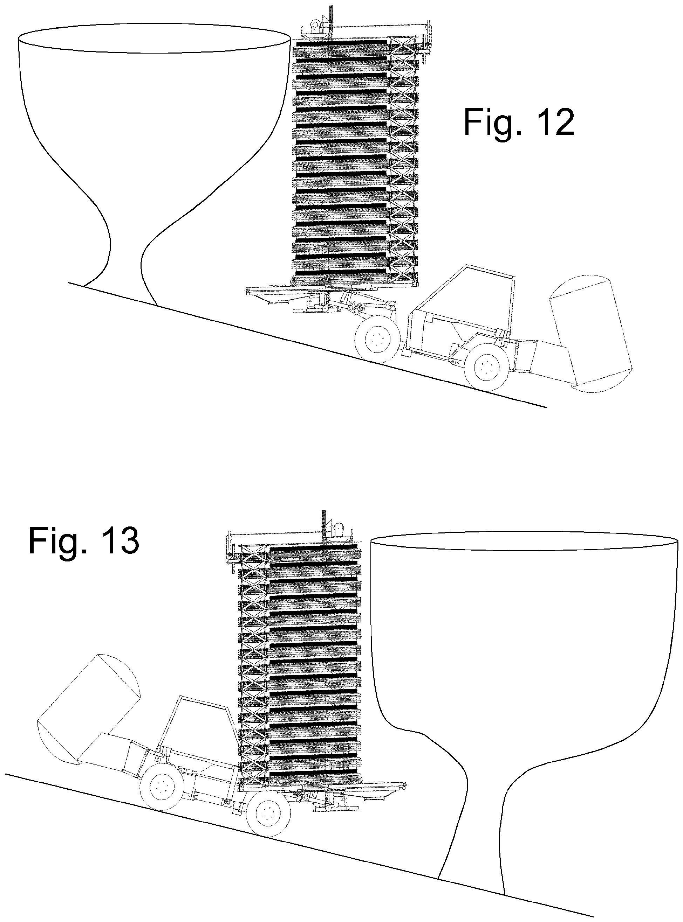

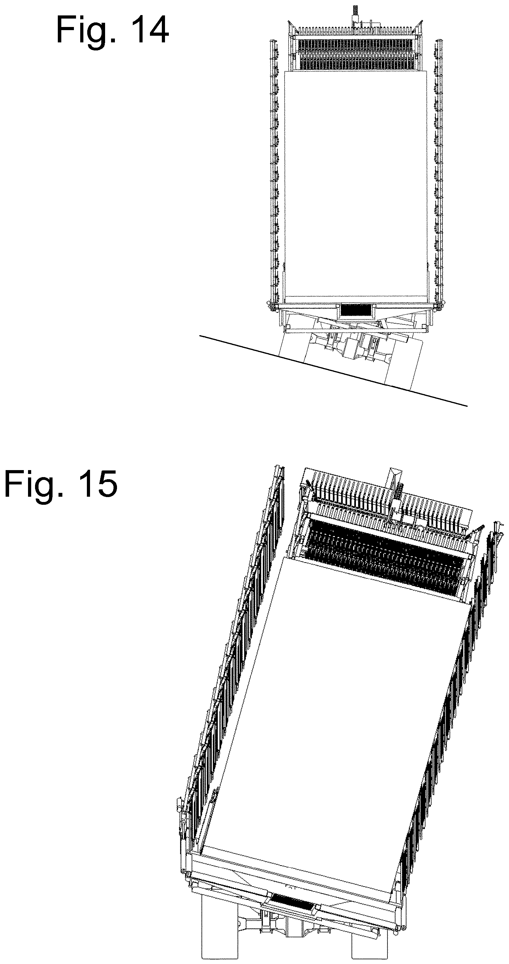

Die Figur 12 zeigt den Ernteroboter in seinem Einsatz in abfallendem Gelände. Hier ist gezeigt, wie er in einem Hang von unten an einen abzuerntenden Baum herangefahren wird. Figur 13 zeigt den Ernteroboter mit Blick auf seine rechte Seite, wenn er in einem Hang von oben an einen abzuerntenden Baum herangefahren wird. Die Figur 14 zeigt den Ernteroboter in einer Ansicht von vorne, wenn er in einem Hang auf einer horizontalen Höhenkurve auf einen nicht dargestellten abzuerntenden Baum herangefahren wird, und die Figur 15 zeigt ihn auf horizontalem Grund, wobei der Erntekopf mit all seinen Elemente gegenüber dem Fahrzeug seitlich geneigt wurde. Der Roboter ist also am Fahrzeug nach vorne und hinten sowie nach links und rechts um einen gewissen Schwenkwinkel von ca. 20° bis 30° schwenkbar.

In Figur 16 ist der Ernteroboter wie in Figur 3 dargestellt gezeigt, aber mit nach hinten eingezogenen Pflückstäben 3,4. Der ganze Raum zwischen den beiden Seitenwänden 8 bleibt deshalb frei und gibt den Blick frei auf die aufrollbare Blache 48, welche den Raum zwischen den Seitenwänden 8 gegen hinten abschliesst.

In Figur 17 ist der Erntekopf des Ernte-Roboters, sowie aus Figur 16 ersichtlich, in vergrösserter Darstellung gezeigt, mit den nach hinten ausgezogenen Pflückstäben 3,4. Mittels des pneumatischen Antriebs 25 mit Pulley sowie dem darauf aufzuwickelnden Seilzug 22 kann der Stabauszieher 49 wieder nach vorne verschoben werden und schiebt damit die Pflückstäbe 3,4 in ihre Einsatzposition.

Dieser ganze Erntekopf ist in Figur 18 in noch weiter vergrösserter Darstellung von schräg hinten und oben gesehen dargestellt. Man erkennt die nach hinten ausgezogenen Pflückstäbe 3,4 mit ihrem Stabauszieher 49, welcher mit dem Seilzug 22 nach vorne verschiebbar ist, unter Mitnahmen der Pflückstäbe 3,4, sowie den Rahmen 17, in welchem der Stabauszieher 49 und die Pflückstäbe 3,4 geführt sind.

Als Alternative zum Anbauen an einen Traktor oder einen Hanggeräte-Trägerfahrzeug 20 kann dieser Ernteroboter auch mit einem eigenen Fahrgestell bestückt werden. Als solches Fahrgestell eignet sich eines mit Antriebsraupen für einen den Grund schonenden und geländegängigen Antrieb, oder ein Allradantrieb mit vier oder mehr Rädern. Ein allseits schwenkbarer Support auf dem Fahrgestell ermöglicht, dass der Ernteroboter auf dem Fahrgestell stets in eine aufrechte Lage positionierbar und in dieser Lage festhaltbar ist. In Figur 19 ist der Ernteroboter, aufgebaut auf ein eigenes Fahrgestell 54, in einer Seitenansicht dargestellt, mit Blick auf seine linke Seite. Sein Erntekopf ist hier in seine oberste Position ausgefahren, indem ihn die Scherenkonstruktionen 11 in die Höhe hievten. Das Fahrgestell 54 ist mit vier Rädern bestückt, die zum Beispiel alle antreibbar sind. Hierfür kann je ein Elektroantrieb für jedes einzelne Rad vorgesehen werden. Die vorderen wie auch die hinteren Räder können gelenkt ausgeführt sein, für eine maximale Manövrierbarkeit des Ernteroboters zwischen den Bäumen eines Olivenhains. Ein solcher Ernteroboter wird mittels einer drahtlosen Fernsteuerung bedient. Die Bedienperson steht oder sitzt daneben und kann alle Operationen über ein tragbares Steuerpult oder einen Joystick steuern und überwachen. Eine selbstgesteuerte und geregelte Ernte-Roboterversion kann durch differentiales GPS oder mittels Referenzsensoren, die an die Bäume angebracht werden, im Gelände relativ zu den Bäumen positioniert werden. In einem Ernte-Roboter-Netzwerk kommunizieren die Roboter zur Aufteilung der Schwarmarbeit. So können an einem Baum gleichzeitig bis zu vier Ernte Roboter ihren 90° Sektor abernten.

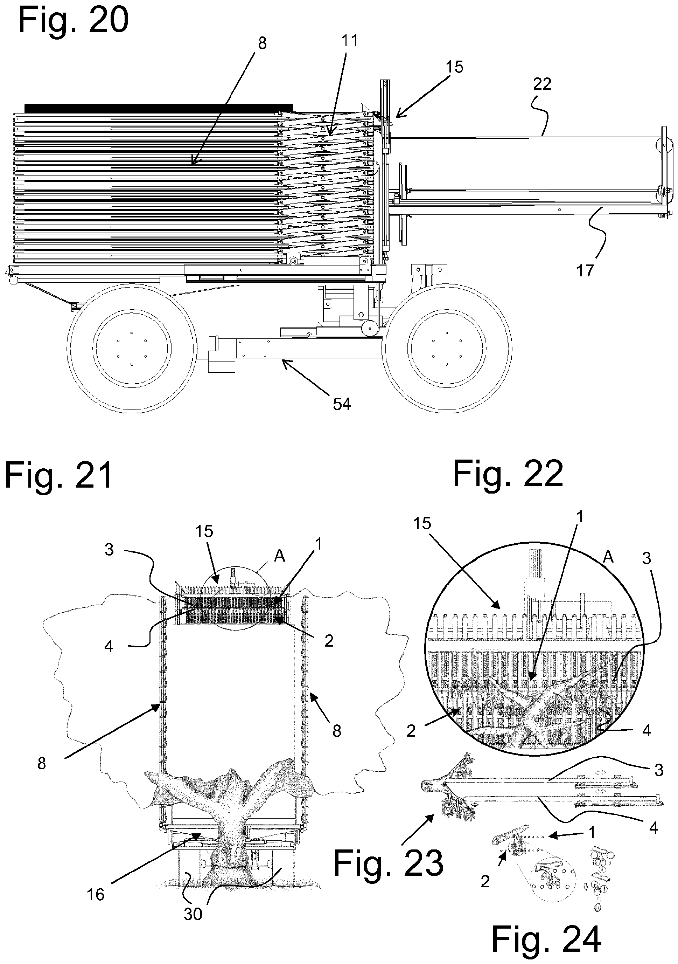

Die Figur 20 zeigt diesen Ernte-Roboter mit seinem eigenen Fahrgestell 54, wobei hier der Erntekopf 15 in seine unterste Position eingefahren ist. In dieser Position ist der Ernte-Roboter transportfähig, indem er zum Beispiel auf einen Anhänger mit tiefer Ladefläche gefahren wird oder auf die Ladefläche eines Liefer- oder Lastwagens gehievt wird.

Die Figur 21 zeigt den Ernte-Roboter hinter einem angedeuteten Olivenbaum beim Hineinfahren in denselben gegen den Betrachter hin. Wenn der Ernte-Roboter in dieser Weise ganz an den Baum bzw. in dessen Ast- und Zweigwerk hineingefahren ist, umschliesst die Ausnehmung an seinem Auffangtrichter 16 den Baumstamm. Man erkennt hier den Auffangtrichter 16 und die beiden Räder 30 des Traktors oder des Hanggeräte-Trägerfahrzeuges. Die beiden Reihen 1,2 der Pflückstäbe 3,4 sind hier in ihre oberste Position nach oben ausgefahren worden. Die beiden Seitenwände 8 sind mit ihren Latten und Rundstäben zwischen den Latten in den Baum hinein gefahren. Jetzt kann ein erstes Ernten beginnen, indem die Pflückstäbe 3,4 auf und ab und in Kreisen geschwungen werden und gleichzeitig aus dem Baum herausgezogen werden, indem sie der Stabauszieher 49 kollektiv zurückfährt. Rechts neben der Zeichnung ist in Figur 22 ein vergrösserter Ausschnitt A aus der Figur 21 gezeigt, in welchem man auf den Erntekopf 15 blickt. Man erkennt die vorderen Enden der oberen Reihe 1 von Pflückstäben 3, und jene der unteren Reihe 2 von Pflückstäben 4.

Die Figur 23 unter diesem vergrösserten kreisrunden Ausschnitt A zeigt zwei Pflückstäbe 3,4 von der Seite her gesehen. Der obere Pflückstab 3 ist an einer Astgabel angeschlagen, während der untere Pflückstab 4 bereits früher daran einen Anschlag fand und somit gegenüber dem oberen Pflückstab 3 beim weiteren Hineinfahren in den Baum ein Stück weit zurückverschoben wurde.

Die Figur 24 zeigt einen Blick von vorne auf die Enden der Pflückstäbe. Man erkennt die obere Reihe 1 und die untere Reihe 2 und etwas vergrössert dargestellt die Früchte bzw. Oliven zwischen den beiden Reihen 1,2 und rechts davon wie diese unter den Schwingungen der Pflückstäbe 3,4 von ihren Stielen losgerissen werden und nach unten fallen.

Anhand der Figur 25 wird die Halterung und Lagerung der Pflückstäbe 3,4 am Erntekopf 15 genauer offenbart. Am hinteren Ende stecken die Pflückstäbe 3,4 in einer Fassung 35, 36. Diese Fassungen 35,36 sind an vertikalen Stäben gehalten, die auf und ab bewegbar sind. Hierzu ist das Profil 37 mittels eines pneumatischen Aktuators auf und ab bewegbar. Die schwenkbaren Streben 38 am Erntekopf 15 übertragen die Auf- und Ab-Bewegung auf das untere Profil 51. Die Enden der Pflückstäbe 3 und 4 werden somit synchron einander entgegengerichtet auf und abwärts bewegt. Die weiter vorne angeordneten Halterungen mit ihren Fassungen 33,34 sind vertikal nachgiebig ausgeführt, das heisst sie sind an Federbeinen 31,32 befestigt, sodass also die Fassungen 33,34 nach oben und unten federnd nachgeben können. Wenn nun die hinteren Fassungen 35,36 pneumatisch oder elektrisch angetrieben auf- und abwärts bewegt werden, so tun das auch die vorderen Abschnitte der Pflückstäbe 3,4 ab ihren gefedert gelagerten Fassungen 33,34. Sollte aber der vordere Abschnitt eines Pflückstabes beim Schwenken auf ein hartes Hindernis stossen, so bietet diese federnde Lagerung in den Fassungen 33,34 ein Ausweichen, sodass die Pflückstäbe 3,4 keinen Schaden nehmen.

Die Figur 26 zeigt die Situation, wenn die beiden Enden der gezeigten Pflückstäbe 3,4 ganz gegeneinander gefahren wurden und auf ein Hindernis treffen. Das Betätigungsprofil 37 ist entsprechend an seiner obersten Position angelangt. Damit sich die Pflückstäbe 3,4 nicht durchbiegen wird die Fassung 33,34 vertikal gegen eine Federkraft ausgelenkt. Entsprechend sind die vorderen Abschnitte der Pflückstäbe 3,4, also jene vor den Fassungen 33,34, zusammengeschwenkt, sodass die vorderen Enden der versetzt angeordneten Pflückstäbe 3,4 am Hindernis zusammengepresst werden. Die Wirkung der Pflückstäbe 3,4 auf das Hindernis gleicht der Wirkung einer zupackenden Zange. Diese ganze Bewegung und Einfederung gilt für alle Pflückstäbe 3,4 der oberen und unteren Reihe 1,2.

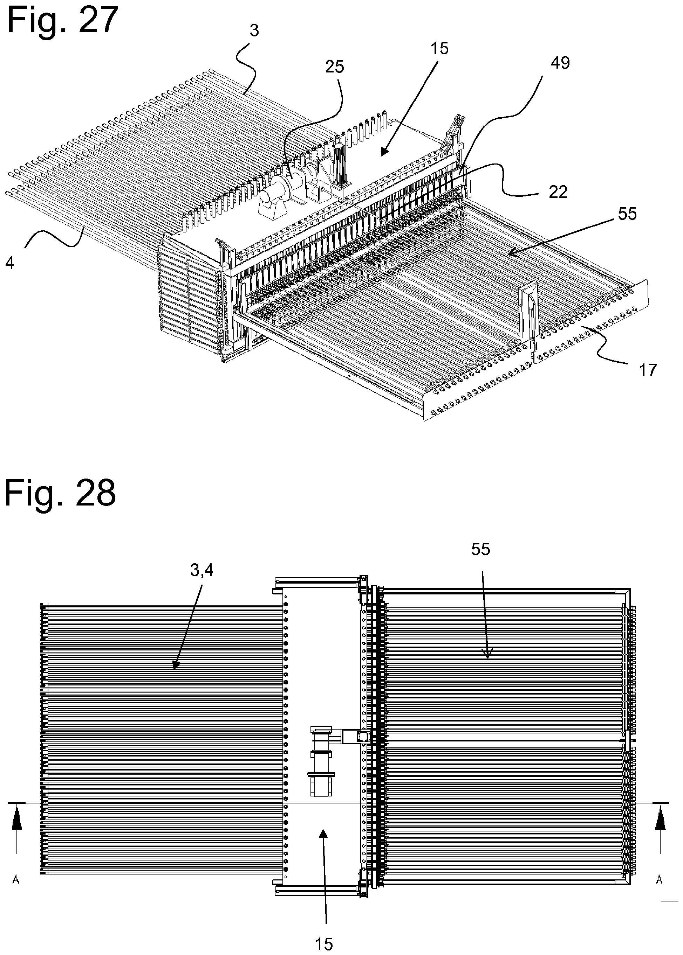

Die Figur 27 zeigt den Erntekopf 15 mit der Vielzahl von längs verschiebbaren Pflückstäben 3,4 in einer Ansicht von schräg oben und hinten mit dem Rahmen 17 und dem Seilzug 22 für das Ausziehen des Stabausziehers 49 mittels des Antriebs 25. In Figur 28 sieht man den Erntekopf 15 noch von oben.

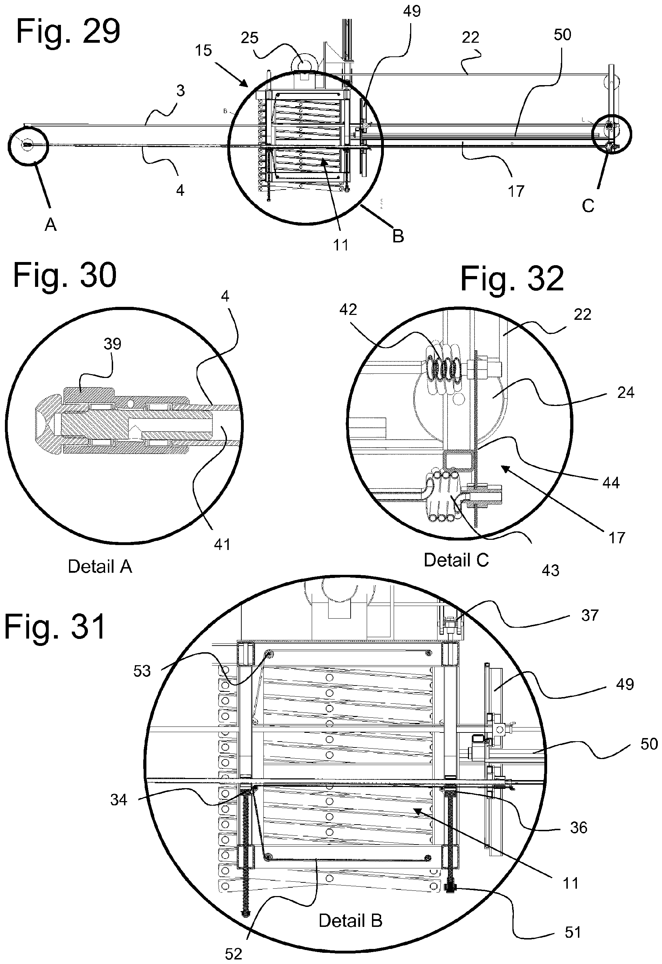

Und in Figur 29 sieht man den Schnitt längs der Linie A-A aus Figur 28 mit dem Erntekopf 15 und den nach vorne ragenden Pflückstäben 3,4 sowie dem nach hinten ragenden Rahmen 17 mit seinem Seilzug 22 und Antrieb 25 in einer Ansicht von der Seite her gesehen. Die Scherenkonstruktion 11 ist hier vollständig zusammengefahren, sodass sich die Pflückstäbe 3,4 in der untersten Position befinden. Interessant ist das Detail A an der vorderen Spitze des hier unteren Pflückstabes 4, wie in Figur 30 dargestellt. Die Spitze des Pflückstabes 4 trägt eine exzentrische Unwucht 39, welche um die Stabachse rotierbar ist. Hierzu handelt es sich bei diesem Pflückstab um ein Rohr 41. Durch sein Inneres lässt sich Pressluft an seine Spitze fördern, die dann dort die drehbar auf der Stabspitze gelagerte exzentrische Unwucht 39 ins Rotieren bringen kann. Wenn sie rotiert, führt das zu einem allseitigen Ausschwingen des Pflückstabes 4. Je nach Luftdruck und dem Schwingungsverhalten des Pflückstabes 4 kann ein weiches, weites Ausschwingen erzeugt werden bis hin zu einem fast lokalen feinen Vibrieren bei hoher Drehzahl der Unwucht 39. Durch die Überlagerung der beiden Schwingungen, der Rotation und der Auf- und Ab-Bewegung soll die Stabspitze alle Raumpunkte im Bereich rund um die Stabspitze durchlaufen können und damit einen höheren Ernteerfolg erzielen. Unter dem Detail A ist in Figur 31 das Detail B in Figur 29 dargestellt, welches auch wieder aus Schnitt A-A aus Figur 29 abgeleitet ist. Ersichtlich wird hier im Detail die Federung der Pflückstäbe 3,4 mittels eines Gummibandes 52, welches am Erntekopf 15 befestigt ist und über Umlenkrollen 53 mit dem Ende der Pflückstäbe 3,4 verbunden ist. Weiter erkennbar sind die Fassungen 34,36 des Pflückstabes 4. Das Detail C in Figur 32 ist ebenfalls dem Schnitt A-A aus Figur 29 entnommen und zeigt die hintere untere Ecke des Rahmens 17 mit der dort angeordneten Umlenkrolle 24 für den Seilzug 22. Des Weiteren sind die beiden Pneumatik-Schläuche 42 und die Pneumatik-Anschlüsse 43 zur Versorgung des pneumatisch betriebenen Unwucht-Mechanismus am Pflückstabende 6 ersichtlich.

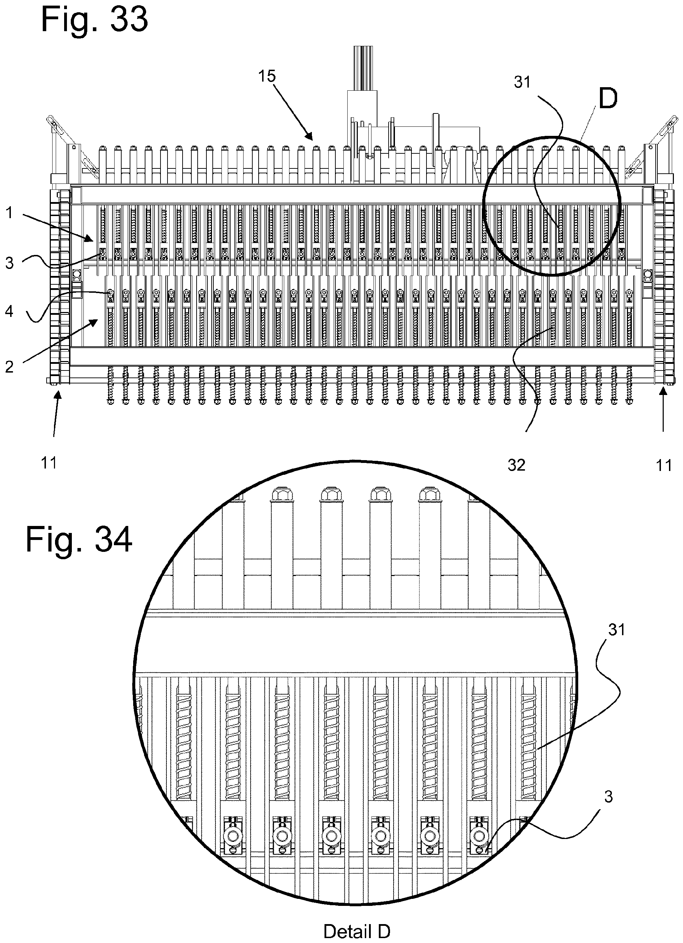

Die Figur 33 zeigt den Erntekopf 15 mit der Vielzahl von längsverschiebbaren Pflückstäben 3,4 und ihre Aufhängungen in einer Ansicht von vorne gesehen, und darunter in Figur 34 einen kreisförmigen Ausschnitt mit dem Detail D aus Figur 33 in vergrösserter Darstellung. Man erkennt die Federbeine 31 für die obere Reihe von Pflückstäben 3, und die unteren Federbeine 32 für die untere Reihe von Pflückstäben 4, und in Figur 33 die je beidseits parallel angeordneten zwei zusammengefahrenen Scherenkonstruktionen 11.

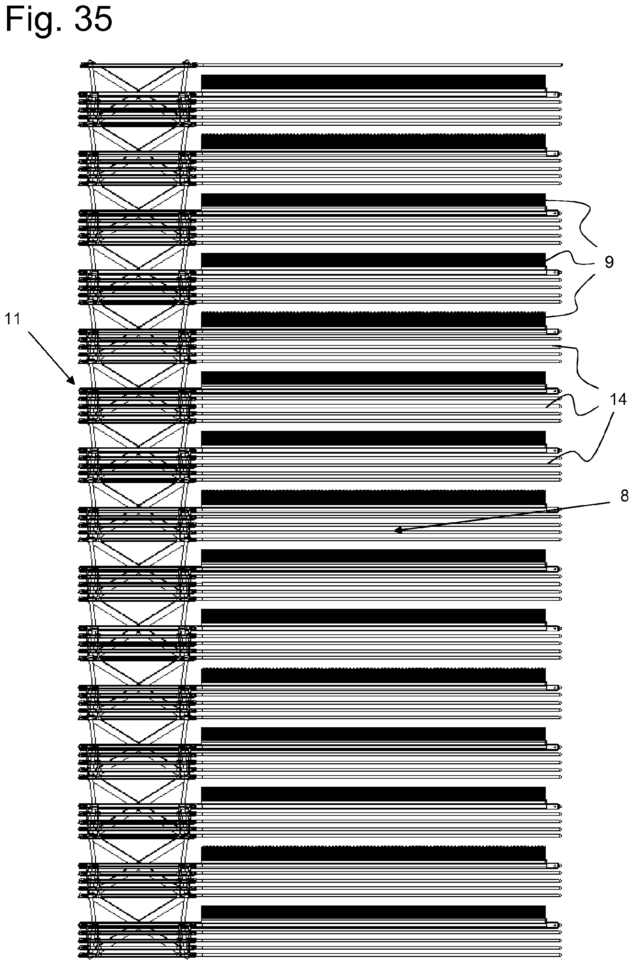

Die Figur 35 zeigt die linke Seitenwand 8 des Ernte-Roboters in nach oben ausgefahrenem Zustand mit Blick auf ihre Innenseite. Sie besteht aus einer Anzahl von rundum freien Latten 9 und zwischen den Latten einer Anzahl Rundstäben 14 zum Hineinfahren in das Ast- und Zweigwerk eines Baumes. Diese Latten 9 und Rundstäbe 14 können nach allen Seiten elastisch biegsam ausweichen. Die Seitenwände 8 verhindern, dass die durch die Schwingungen der Pflückstäbe 3,4 allenfalls seitlich wegfliegenden Früchte bzw. Oliven oder Nüsse nicht auf den Boden fallen und verloren gehen. Vielmehr werden sie mit grosser Wahrscheinlichkeit von den Latten 9 oder Rundstäben 14 abgefangen und fallen hernach in den Auffangtrichter 16. Am hinteren Ende der Seitenwand 8 wirken die Scherenkonstruktionen 11, für jede Seitenwand 8 zwei an der Zahl. Die Latten 9 und die Rundstäbe 14 reichen über diese Scherenkonstruktion 11 hinweg nach hinten und können wie die Pflückstäbe 3,4 gegen eine Federkraft translatorisch nach hinten geschoben werden.

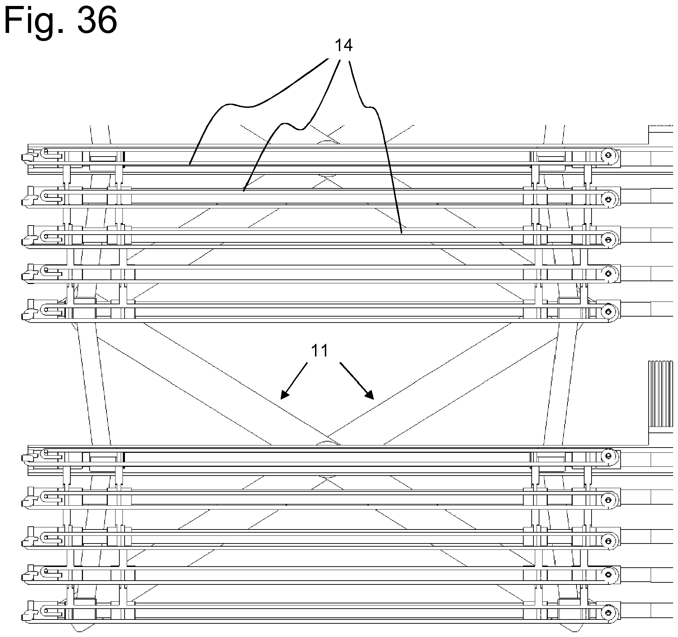

Die Figur 36 zeigt einen Blick auf die Rundstäbe 14 im Bereich der Scherenkonstruktion 11. Diese Rundstäbe 14 können zwischen zwei Scherenkonstruktionen 11 verlaufen, sodass man hier nur die äussere Scherenkonstruktion 11 hinter den Rundstäben 14 erkennt. Die Rundstäbe 14 sind mittels quer zu ihnen verlaufenden Gelenklaschen verbunden. Wenn sich die beiden äusseren Enden der Gelenklaschen zueinander hin bewegen, so buchten sie die Rundstäbe 14 weiter gegen das Innere der Seitenwand 8 hin aus, sodass sich der Radius des gebildeten Bogens verkleinert.

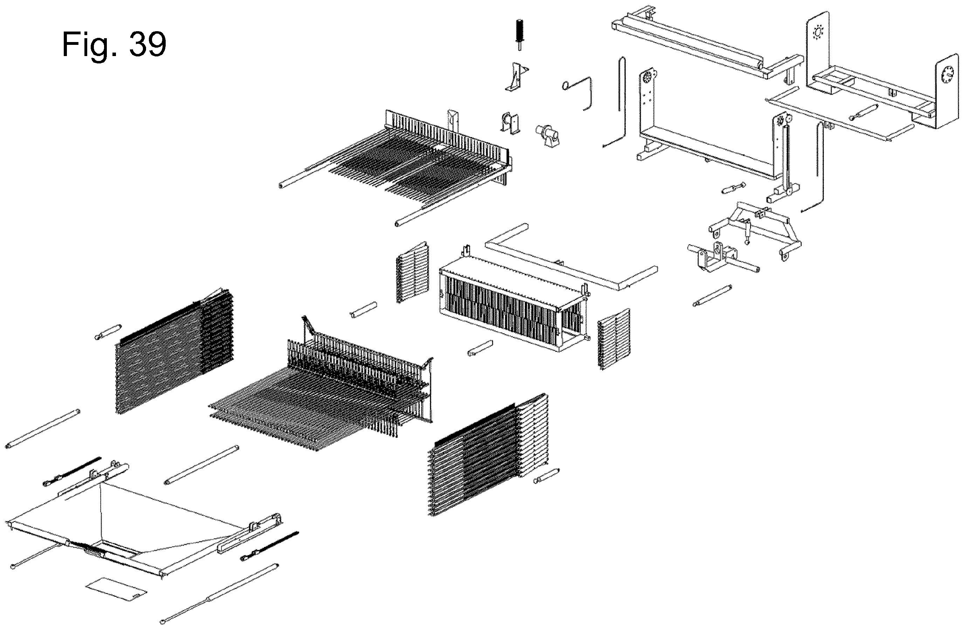

Anhand von Figur 37 kann die Anordnung der Rundstäbe 14 in diesen Gelenkbändern oder Gelenklaschen 45 besser verstanden werden. Gezeigt ist ein Ausschnitt eines Schnitts durch eine Seitenwand 8. Die Gelenkbänder oder Gelenklaschen 45 bestehen hier aus vier gelenkig miteinander verbundenen Gliedern 46, wobei an den Gelenkstellen die Rundstäbe 14 senkrecht zu den Gelenkbändern 45 verlaufend befestigt sind. Nun wird klar, dass, wie in Figur 38 gezeigt, wenn die Scherenkonstruktionen 11 ganz nach unten zusammengefahren sind und die Abstände zwischen den Latten 9 minimal geworden sind, dann die Gelenkbänder 45 mit ihren vier Gliedern 46 ganz zusammengeschwenkt sind, wie dargestellt. Die Rundstäbe 14 bilden dann gegen innen einen Bogen und ein für die Früchte undurchdringliches Gitter aus horizontalen wenig beabstandeten Stäben 14. Schliesslich zeigt die Figur 39 alle Teile des beschriebenen Aufbaus in einer Explosionszeichnung. Anhand dieser Explosionszeichnung lassen sich weitere Einzelheiten erkennen und wie diese Teile alle zusammenwirken. Alle zum Einsatz kommenden Antriebe für die verschiedenen Funktionen des Ernteroboters können im Grundsatz hydraulische, pneumatische oder elektrische Antriebslösungen sein, je nach besonderem Vorteil. Für das Ausfahren der Pflückstäbe wird eine pneumatische Variante wohl vorteilhaft sein, und für das Ausrichten des ganzen Ernteroboters ins Lot wohl eine hydraulische Lösung, während für das Oszillieren der Pflückstäbe eine elektrische oder pneumatische Lösung zum Einsatz kommen kann.

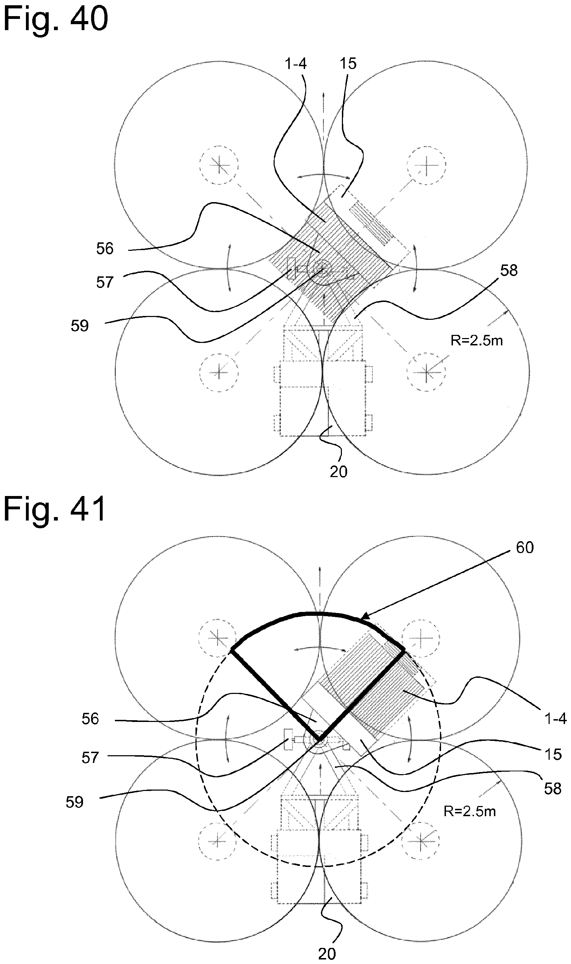

Schliesslich zeigt die Figur 40 in einer Ansicht von oben gesehen, wie eine Vierergruppe von dicht stehenden Olivenbäumen als Teil einer Doppelreihe von Olivenbäumen abgeerntet werden kann. Die einzelnen Olivenbäume weisen hier im Grundriss einen Radius von 2.5m auf. Der Roboter bzw. sein Erntekopf 15 ist hierzu um seine Hochachse 59 schwenkbar auf einem Drehteller 56 gelagert. Dieser Drehteller weist ein eigenes Fahrwerk 57 auf, das über eine Deichselkonstruktion 58 an einen Traktor oder ein Hanggeräte-Trägerfahrzeug 20 ankoppelbar ist. Zunächst wird mit dem Fahrzeug genau auf das Zentrum der vier Bäume ausgerichtet zwischen diese hineingefahren und gleichzeitig wird, sobald der Erntekopf 15 in den zentralen Bereich in der Mitte zwischen den Bäumen hineinfährt, dieser Erntekopf 15 um die Hochachse 59 nach rechts geschwenkt, wie dargestellt. Die Pflückstäbe 1-4 ragen in diesem Zustand hinten aus dem Erntekopf 15. Im nächsten Schritt werden die Pflückstäbe 1-4 gegen den Baumstamm hin ausgefahren, wie das in Figur 41 dargestellt ist. Die Pflückstäbe 1-4 werden dann in Schwingung versetzt und langsam zurückgezogen, während die Fürchte, hier die Oliven, nach unten fallen und aufgefangen werden. Hernach wird der Erntekopf zum Beispiel um 45° nach links geschwenkt. Hierzu muss mit dem Traktor 20 allenfalls ein stückweit zurückgefahren und hernach wieder vorgefahren werden. Die Pflückstäbe werden dann zur Hälfte in den Baum hinten rechts und zur Hälfte in den Baum hinten links hineingeschoben und diese Bereiche werden abgeerntet. Dann wird der Erntekopf nach dem etwas Zurückfahren des Traktors um abermals 45° nach links geschwenkt, unter Vorfahren des Traktors, sodass sich die gleiche Situation ergibt wie in Figur 40 gezeigt, jetzt aber spiegelbildlich am Baum hinten links. Die Pflückstäbe 1-4 werden wiederum hineingefahren und die Oliven werden abgeerntet. Anschliessend kann der Traktor aus der Gruppe herausfahren und das Gleiche von einer anderen Seite der Baumgruppe aus vollziehen. Es werden jedes Mal die inneren Sektoren 60 der Bäume abgeerntet. Die äusseren Bereiche der Bäume werden indessen in konventioneller Manier wie früher beschrieben abgeerntet. Insgesamt gelingt es in dieser Weise, den ganzen Baum rundum effizient abzuernten, auch bei engen Baumständen.

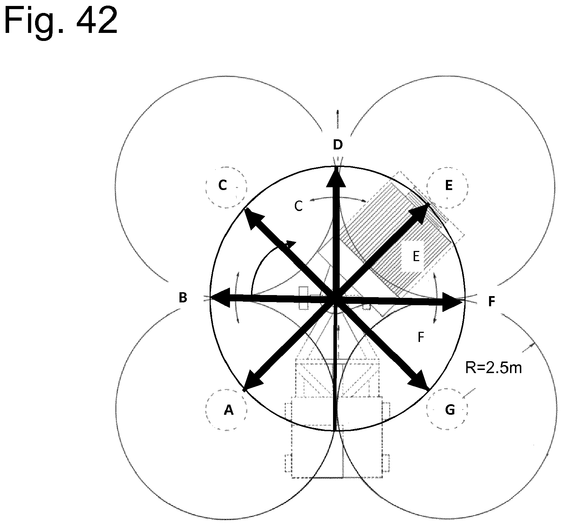

Die Figur 42 zeigt eine Vierer-Baumgruppe mit je 2.5m Radius eines einzelnen Baumes und die Methode des Aberntens, wobei hier der Erntekopf nacheinander in mehrere Sektoren hineinfährt, und zwar auf den Radialen A, B, C, D, E, F und G. Der Roboter beginnt zum Beispiel im vorderen Baum links und fährt den Erntekopf auf der Radialen A in den Baum hinein und erntete diesen Bereich ab. Hernach wird der Erntekopf nach dem Herausfahren aus dem Baum im Grundriss gesehen nach rechts, im Uhrzeigersinn geschwenkt und dann fährt der Erntekopf auf der Radialen B zwischen den beiden Bäumen auf der linken Seite im Bild hinein und erntet diesen Bereich ab, dann auf der Radialen C, dann auf der Radialen D usw. In dieser Reihenfolge, ob links oder rechts angefangen spielt keine Rolle, wird der Prozess am schnellsten abgearbeitet, um diesen inneren Sektor zu bearbeiten und abzuernten. Die restlichen Bereiche können von aussen abgeerntet werden. Dieser Prozess ermöglicht mehr Effizienz, weil damit die Repositionierungszeit des Roboters um bis zu 50% reduziert werden kann. Damit die Erntezeit im Mittel ca. 5 Minuten pro Baum beträgt, sollte nach dieser Methode vorgegangen werden. Diese Lösung wird allerdings nicht bei jeder Steigung möglich sein. In diesem Fall kann auf die Vorgehensweise wie zu Figuren 12 bis 14 gewechselt werden. Je nach Geländesteigung und Dichte der Baumbestände kann die eine oder andere Erntestrategie gewählt werden. Diese beiden Strategien können sich ergänzen.

Die Bäume werden in den meisten Olivenhainen mit Hilfe von Messmitteln gepflanzt so dass die Musterabweichungen gering ausfallen, im gezeigten beträgt die quadradische Grundfläche, welche die vier Bäume einschliesst, 5x5m. Die Bäume können ausserdem mit Sensoren ausgerüstet werden, welche mit dem Roboter kommunizieren und diesem spezifische Positionsdaten durchgeben können. Die Sensoren sind dabei ähnliche Sensoren wie Chips, die zum Beispiel Hunden oder Wildtieren implantiert werden, damit deren Aufenthalt jederzeit überwacht werden kann. Daraus können alle spezifischen Daten des Baumes ausgelesen werden, zum Beispiel seine exakte Position, Höhe, seine Sektorenaufteilung etc. Die Baumsensoren können die Aufgabe eines GPS übernehmen und haben für den Ernteroboter die Wirkung eines Non Direction Beacons (NDB) oder eines VHF Omnidirectional Ranges (VOR) analog zur Fliegerei. Wenn jeder Baum mit einem solchen Sensor ausgerüstet ist, bewegt sich der Roboter dann schliesslich durch eine bekannte Matrix. Das GPS wird überflüssig. Zudem ergibt sich ein zusätzlicher Markt und damit eine zusätzliche Einnahmequelle durch den Verkauf dieser Sensoren, welche dann in grossen Stückzahlen benötigt werden.

### Ziffernverzeichnis

- 1: Obere Reihe von Pflückstäben 3
- 2: Untere Riehe von Pflückstäben 4
- 3: Obere Pflückstäbe
- 4: Untere Pflückstäbe
- 5: Halterung
- 6: freien vorderen Enden der Pflückstäbe
- 7: hinteres Ende der Pflückstäbe
- 8: begrenzende seitliche Wände
- 9: vorne freien Latten
- 10: hinteres Ende der Latten 9
- 11: Scherenkonstruktion
- 12: Zwischenraum zwischen den Latten
- 13: Längsränder der Latten
- 14: Stäben zwischen den Latten 9
- 15: Erntekopf
- 16: Auffangtrichter
- 17: Rahmen zur Aufnahme der hinteren Enden der Pflückstäbe 3,4
- 18: Loch im Auffangtrichter
- 19: Ausnehmung im Auffangtrichter
- 20: Hanggeräte-Trägerfahrzeug 20
- 21: Gegengewicht zum Ernteroboter
- 22: Seilzug für Rahmen 17
- 23: Umlenkrolle Seilzug 22
- 24: Umlenkrolle Seilzug
- 25: Antrieb für Seilzug 22
- 26: Antrieb für Scherenkonstruktion 11
- 27: Vierkantprofil
- 28: Kleineres Vierkantprofil, in 27 verschiebbar
- 29: Laschen
- 30: Räder des Hanggeräte-Trägerfahrzeuges
- 31: Federbein für Pflückstab 3
- 32: Federbein für Pflückstab 4
- 33: Fassung an Federbein 31 für Pflückstab 3
- 34: Fassung an Federbein 32 für Pflückstab 4
- 35: Fassung hinten am Pflückstab 3
- 36: Fassung hinten am Pflückstab 4
- 37: Betätigungsprofil für die Schwingung des Pflückstabs 3
- 38: Schwenkstreben für Betätigungsprofil
- 39: Exzentrische Unwucht
- 40: Bogen der Gelenkbänder
- 41: Rohr als Pflückstab
- 42: Pneumatikschlauch für Unwuchtmasse
- 43: Pneumatikanschluss zur Ventilbox
- 44: Rückseitiges Profil des Rahmens 17
- 45: Gelenkband/Gelenklasche
- 46: Glieder des Gelenkbandes
- 47: Rolle für die Blache
- 48: Blache oder Netz für die Hinterseite des Ernteroboters
- 49: Stabauszieher
- 50: Führung
- 51: Unteres Profil
- 52: Gummiseil
- 53: Umlenkrollen
- 54: Fahrgestell des selbstfahrenden Ernteroboters
- 55: Federnd ausziehbare Pneumatikschläuche im Rahmen 17
- 56: Drehteller zur Schwenkung des Erntekopfes
- 57: Fahrwerk für Drehteller
- 58: Deichselkonstruktion des Trägerfahrzeugs
- 59: Hochachse, um die der Erntekopf schwenkbar ist.

## Patentansprüche

1. Ernte-Roboter zum Pflücken von Baumfrüchten, mit mindestens zwei parallel zueinander verlaufenden, abstehenden und versetzen Reihen (1,2) von Pflückstäben (3,4), die in ihrem hinteren Bereich in einer Halterung (5) gehalten und mit dieser kollektiv mit ihren freien vorderen Enden (6) in einen Baum hineinschiebbar sind und mit ihren vorderen Enden (6) gegeneinander schwenkbar und wieder zu öffnen sind, und als Ganzes in jedem Schwenkzustand kollektiv aus dem Baum herausziehbar sind, unter Abziehen von Früchten zwischen den Pflückstäben (3,4) der beiden Reihen (1,2) von Pflückstäben (3,4),
***dadurch gekennzeichnet, dass***
die einzelnen Pflückstäbe (3,4) jeder Reihe (1,2) in ihrem hinteren Bereich translatorisch gegen eine Federkraft verschiebbar in der Halterung (5) gelagert sind, sodass jeder Pflückstab (3,4) innerhalb einer Reihe (1,2) beim Einfahren der Pflückstäbe (3,4) in einen Baum beim Anschlagen mit seinem vorderen Ende (6) an einem Ast durch denselben stoppbar ist, während alle nicht auf ein Hindernis auftreffenden Pflückstäbe (3,4) weiter in den Baum hineinschiebbar sind, wonach die Pflückstäbe (3,4) der beiden Reihen (1,2) in ihrer translatorischen Position gegeneinander hin und her oszillierbar sind, und gleichzeitig oder anschliessend an ein Zusammenschwenken mittels eines Stabausziehers (49) rückwärts aus dem Baum herausziehbar sind, wobei alle Pflückstäbe (3,4) durch die Kraft der wirkenden Federkräfte nach vorne schiebbar und somit in ihre Ausgangslage bringbar sind.

2. Ernte-Roboter zum Pflücken von Baumfrüchten nach Anspruch 1,
***dadurch gekennzeichnet, dass***
an der vorderen Spitze der Pflückstäbe (3,4) je eine um die Längsachse des Pflückstabes (3,4) rotierbare exzentrische Unwucht (39) gelagert ist, welche durch den als Rohr (41) ausgebildeten Pflückstab (3,4) mittels Pressluft oder elektrischem Antrieb rotierbar ist, sodass den Spitzen der Pflückstäbe (3,4) in eine zum Auf- und Abschwingen überlagerte Schwingung versetzbar sind und mit den Spitzen ein Bereich rund um die Spitzen im Ruhezustand überstreichbar sind oder sie je nach Rotationsgeschwindigkeit der Unwucht in eine überlagerte Vibration versetzbar sind.

3. Ernte-Roboter zum Pflücken von Baumfrüchten nach einem der vorangehenden Ansprüche,
***dadurch gekennzeichnet, dass***
die Pflückstäbe (3,4) am Ernte-Roboter in einem Bereich zwischen einem Fünftel und einem Drittel ihrer Länge von zwischen 1.50 m und 2.50 m vom ihrem hinteren Ende (7) aus quer zu ihrer Verlaufrichtung federnd gelagert sind, und ihre hinteren Enden (7) motorisch in Richtung des Federweges hin und her verschiebbar sind, sodass die vorderen Enden (6) um einen grösseren Verschiebeweg als die hinteren Enden oszillierbar sind, und beim Auftreffen auf ein Hindernis durch die gefederte Lagerung in Richtung der Oszillationsebene nachgiebig gelagert sind, und wobei die Pflückstäbe (3,4) in allen Richtungen auslenkbar gelagert sind, sodass sie bei Auftreffen mit ihrer Spitze auf ein Hindernis zur Vermeidung einer Verkrümmung oder eines Bruches ablenkbar sind.

4. Ernte-Roboter zum Pflücken von Baumfrüchten nach einem der vorangehenden Ansprüche,
***dadurch gekennzeichnet, dass***
die Pflückstäben (3,4) ihren freien vorderen Enden (6) in einen Baum hineinschiebbar sind, indem sie zu einem Aufbau gehören, der auf ein Fahrzeug aufgebaut ist und somit durch Fahren mit dem Fahrzeug in den Baum hineinschiebbar sind, oder aber dass der Aufbau auf dem Fahrzeug einen oder mehrere hydraulisch, pneumatisch oder elektrisch betätigbare Ausfahr- und Einfahraktuatoren einschliesst, sodass das Ein- und Ausfahren in den Baum durch dieselben mittels einer Relativbewegung zum Fahrzeug erfolgt.

5. Ernte-Roboter zum Pflücken von Baumfrüchten nach einem der vorangehenden Ansprüche,
***dadurch gekennzeichnet, dass***
die beabstandeten Reihen (1,2) von Pflückstäben (3,4) am Ernte-Roboter quer zur von den Pflückstäben (3,4) gebildeten Gitterebene verschiebbar gelagert sind, indem der Erntekopf (15) des Ernteroboters, in welchem die Pflückstäbe (3,4) gelagert sind, mittels hydraulisch oder elektrisch betätigbarer Scherenkonstruktionen (11) höhenverstellbar sind.

6. Ernte-Roboter zum Pflücken von Baumfrüchten nach einem der Ansprüche 2 bis 5, ***dadurch gekennzeichnet, dass*** auf der Rückseite des Erntekopfes (15) ein Rahmen (17) schubladenartig nach hinten ausziehbar gelagert ist, zur Aufnahme von durch Hindernisse zurückgestossener Pflückstäbe (3,4) beim Hineinfahren mit denselben in einen Baum, und dass am hinteren Ende des Rahmens (17) Pneumatikanschlüsse vorhanden sind, zur Verbindung mit den hinteren Enden von federnd ausziehbaren Pneumatikschläuchen (55), welche mit ihrem vorderen Ende an die hinteren Enden der Pflückstäbe (3,4) angeschlossen sind, zur Versorgung der rotierbaren Exzenter (39) an ihren vorderen Enden mit Pressluft für deren Antrieb.

7. Ernte-Roboter zum Pflücken von Baumfrüchten nach einem der vorangehenden Ansprüche,
***dadurch gekennzeichnet, dass***
die Reihen (1,2) von Pflückstäben (3,4) am Ernte-Roboter zwischen zwei dieser Reihen (1,2) an ihren beidseitigen Enden begrenzenden Wänden (8) aus einer Mehrzahl von in gleicher Richtung wie die Pflückstäbe (3,4) verlaufenden, voneinander beabstandeten und vorne freien Latten (9) angeordnet sind, welche an ihrem hinteren Ende (10) an einer ausfahrbaren Scherenkonstruktion (11) gehalten sind, wobei diese Latten (9) je einen Lattenrost als Wand (8) bilden, und innerhalb dieser beiden Wände (8) die Pflückstab-Reihen (1,2) quer zur Gitterebene der Reihen (1,2) motorisch angetrieben verschiebbar sind, wobei die Latten (9) quer zu ihrer Verlaufrichtung von einem die Scherenkonstruktion (11) zusammengefahrenen Zustand mit minimalen seitlichen Abständen der Latten (9) unter gleichmässiger Erweiterung ihrer Abstände ausfahrbar sind, zur Bildung je eines Lattenrostes als Seitenwand (8), an welcher die Latten (9) je einen Zwischenraum (12) frei lassen.

8. Ernte-Roboter zum Pflücken von Baumfrüchten nach Anspruch 7,
***dadurch gekennzeichnet, dass***
die Längsränder (13) von benachbarten Latten (9) in ihrem hinteren Bereich mit mindestens einer gelenkigen Halterung verbunden sind, in welcher parallel zu den Latten (9) verlaufend eine Mehrzahl von Stäben (14) gehalten ist, sodass die Abstände der Stäbe (14) durch Ein- bzw. Ausfahren der Latten (9) veränderbar ist, und die Stäbe (14) und Latten (9) mit ihren freien Enden in jeder Ausfahrlage der Latten (9) in einen Baum hineinfahrbar sind, und bei hinreichendem Widerstand sowohl die Latten (9) wie auch die Stäbe (14) in ihren Halterungen gegen die Kraft von Federn nach hinten verschiebbar sind.

9. Ernte-Roboter zum Pflücken von Baumfrüchten nach einem der Ansprüche 7 bis 8,
***dadurch gekennzeichnet, dass***
die Längsränder (13) der Latten (9) mit quer zu den Latten (9) verlaufenden Bürsten aus elastisch nachgiebigen Ruten ausgerüstet sind, zum weitgehenden Schliessen der Wände (8) in ausgefahrenem Zustand.

10. Ernte-Roboter zum Pflücken von Baumfrüchten nach einem der vorangehenden Ansprüche,
***dadurch gekennzeichnet, dass***
die voneinander beabstandeten Reihen (1,2) von Pflückstäben (3,4) horizontal verlaufen und beidseits von lattenrost-artigen lotrecht verlaufenden Wänden (8) begrenzt sind, innerhalb welcher sie aufwärts und abwärts verschiebbar gelagert sind.

11. Ernte-Roboter zum Pflücken von Baumfrüchten nach einem der Ansprüche 1 bis 9,
***dadurch gekennzeichnet, dass***
die voneinander beabstandeten Reihen (1,2) von Pflückstäben (3,4) lotrecht verlaufen und beidseits von lattenrost-artigen horizontalen Wänden (8) begrenzt sind, innerhalb welcher sie seitwärts hin und her verschiebbar gelagert sind.

12. Ernte-Roboter zum Pflücken von Baumfrüchten nach einem der vorangehenden Ansprüche,
***dadurch gekennzeichnet, dass***
er an einen Hanggeräte-Trägerfahrzeug (20) mit Zapfwellen anschliessbar ist, mittels dessen der Ernte-Roboter transportierbar und operierbar ist und mittels dessen Zapfwellen einerseits der zugehörige Kompressors (21) antreibbar ist, und andererseits die zugehörige Hydraulikpumpe für die hydraulischen Antriebe am Ernte-Roboter, wobei der Ernte-Roboter durch Vorwärts- bzw. Rückwärtsfahrt des Hanggeräte-Trägerfahrzeuges (20) in einen Baum hinein verschiebbar und wieder aus ihm herausziehbar ist.

13. Ernte-Roboter zum Pflücken von Baumfrüchten nach einem der Ansprüche 1 bis 11,
***dadurch gekennzeichnet, dass***
er auf einem eigenen Fahrgestell (54) mit Antriebsraupen oder Rädern mit Allradantrieb aufgebaut ist, sodass er selbstfahrend ist, wobei er einen allseits schwenkbaren Support aufweist, auf welchem er auf dem Fahrgestell (54) stets in eine aufrechte Lage bringbar und haltbar ist, wobei der Ernte Roboter über Funk mittels eines Steuergerätes fernsteuerbar ist oder selbstgesteuert operierbar ist oder in ein Ernteroboter-Netzwerk zur Aufteilung von Schwarmarbeit einbindbar ist, wobei die Positionierung der Ernte Roboter relativ zum Baum wird mittels eines GPS-Gerätes mit differentiellem GPS oder mit Hilfe eines Positionssensors am Baum durchführbar ist.

14. Ernte-Roboter zum Pflücken von Baumfrüchten nach einem der vorangehenden Ansprüche,
***dadurch gekennzeichnet, dass***
er mit Neigungssensoren ausgerüstet ist, zur Ermittlung seiner Neigung bzw. Abweichung vom Lot in jeder Richtung (Pitch und Roll), und dass er eine Steuereinheit aufweist, mittels welcher er durch Verarbeitung der Signale der Neigungssensoren mittels hydraulischer Antriebsmittel automatisch im Lot haltbar ist, und dass sein Auffangbehälter (16) motorisch höhenverstellbar an ihm angeordnet ist, und dass die Abstände der beiden Reihen (1,2) von Pflückstäben (3,4), die Höhenlage des Auffangbehälters (16) und die Abstände der Latten (9) der Seitenwände mittels separater hydraulischer, pneumatischer oder elektrischer Antriebe veränderbar und einstellbar sind.

15. Ernte-Roboter zum Pflücken von Baumfrüchten nach einem der vorangehenden
Ansprüche, ***dadurch gekennzeichnet,* dass**
Der Erntekopf (15) auf einem Drehteller (56) mit einem gesonderten Fahrgestell (57) um seine Hochachse schwenkbar gelagert ist, und diese Fahrgestell (57) über eine Deichselkonstruktion (58) mit einem Traktor oder Hanggeräte-Trägerfahrzeug (20) verbindbar, sodass der Erntekopf (15) auf dem Drehteller (56) um mindestens 90° um seine Hochachse schwenkbar ist, und dass der Ernteroboter Sender zum Auslesen von Sensoren an den Bäumen aufweist, sowie Mittel zum Errechnen seiner Position und Bewegungsrichtung relativ zu einem bestimmten Baum.

## Claims

1. Harvesting robot for picking fruit from trees, with at least two mutually parallel extending, protruding and offsetting rows (1, 2) of picking rods (3, 4), that are held in their rear area in a support (5) and collectively with their free, front ends (6), are able to slide into a tree and, with their front ends (6) against each other, are pivotable and to be open again, and collectively can be pulled out in its entirety in every pivoted state of the tree, for picking fruits between the harvesting rods (3, 4) with the two rows (1, 2) of harvesting rods (3, 4),
***characterized by***
the individual harvesting rods (3, 4) of each row (1, 2) mounted in the support (5) so as to be translationally moveable against a spring force (5) in their rear region, so that each harvesting rod (3, 4) within a row (1, 2) during the insertion of the harvesting rods (3, 4) into a tree, when striking its front end (6) on a branch, is stoppable by the same, while harvesting rods (3, 4) able to avoid an obstacle can be moved further into the tree, after which the harvesting rods (3, 4) of the two rows (1, 2) can be swiveled against each other in their current translational position, and at the same time or subsequently can be pulled out of the tree through the rod extractor (49), whereby all harvesting rods (3, 4) are pushed forward through spring forces and thus can be brought into their original position.

2. Harvesting robot for picking tree fruits according to claim 1,
***characterized in that***
at the front tip of the harvesting rods (3, 4) a rotatable eccentric mass (39) is mounted about the longitudinal axis of each one of the harvesting rods (3, 4), which is rotatable via the harvesting rods (3, 4) formed as a tube (41) by means of compressed air or an electric drive so that the tips of the harvesting rods (3, 4) are moveable during the up and down into a superimposed oscillations and, with their tips, would brush an area around the tips while at rest and depending on the rotational speed of the eccentric mass can be moved in a superimposed oscillation.

3. Harvesting robot for picking fruit from trees according to one of the preceding claims,
***characterized in that***
the harvesting rods (3, 4) mounted on the harvesting robot are resiliently mounted perpendicular to their longitudinal direction between one-fifth and one-third of their length of 1.50 m to 2.50 m from their rear end (7) that is motor-driven back and forth in the direction of the spring force so that the front ends (6) are swiveled by a greater displacement than the rear ends and are resiliently supported in direction of their oscillating plane when hitting an obstacle, and wherein the harvesting rods (3, 4) are mounted in a deflectable manner in all directions so that they yield if their tip hits an obstacle, avoiding excessive bending or breakage.

4. Harvesting robot for picking fruit from trees according to one of the preceding claims,
***characterized in that***
the free front ends (6) of the harvesting rods (3, 4) are slideable into a tree, **in that** they belong to a structure, which is mounted on a vehicle and thus can be pushed into the tree by driving the vehicle, or that the structure on the vehicle includes one or more hydraulically, pneumatically or electrically driven extension and retraction actuators, so that the entry and exit into the tree by the same takes place through a relative movement compared to the vehicle.

5. Harvesting robot for picking fruit from trees according to one of the preceding claims,
***characterized in that***
the spaced rows (1, 2) of harvesting rods (3, 4) are mounted in a moveable manner on the harvesting robot transversely to the grid formed by the harvesting rods (3, 4) by the harvesting head (15) of the harvesting robot, in which the harvesting rods (3, 4) are mounted and that is hydraulically or electrically driven by a scissor structure (11) with an adjustable height.

6. Harvesting robot for picking fruits from the trees according to one of the preceding claims 2 to 5,
***characterized in that***
on the back of the harvesting head (15) there is a frame (17) mounted in a drawer-like manner, that is retractable to the rear and housing the harvesting rods (3, 4) that were pushed back by encountering obstacles when driving into the tree with the same, and, that at the rear end of the frame (17), pneumatic connections are provided, for connection to the rear ends of resiliently-extendable pneumatic tubes (55), which are connected with their front end to the rear ends of the harvesting rods (3, 4) for supplying the rotatable eccentric mass (39) at their front ends with compressed air for their drive.

7. Harvesting robot for picking fruits from the trees according to one of the preceding claims,
***characterized in that***
the rows (1, 2) of harvesting rods (3, 4) on the harvesting robot are arranged between two of these rows (1, 2) at their two-sided end barrier walls (8), containing a majority in the same direction as the harvesting rods (3, 4), spaced apart and front free battens (9), which are held at their rear ends (10) on an extendable scissor structure (11), whereby these battens (9) each form a slatted frame as a wall (8), and, within these two walls (8), the harvesting rod rows (1, 2) are moveable in a motor-driven manner longitudinally to the grid of the rows (1, 2), wherein the battens (9) can be extended transversal in relation to the extension of one of the scissor structures (11) in a collapsed state with minimum lateral spacing of the battens (9), with uniform widening of their distances when extending, to each form of a slatted frame as a sidewall (8), where each of the battens (9) leaves a gap (12).

8. Harvesting robot for picking fruits from the trees according to claim 7,
***characterized in that***
the longitudinal edges (13) of adjacent battens (9) are connected in their rear region to at least one articulated support, in which a plurality of rods (14) are held parallel to the battens (9) so that the distances between the rods (14) by retracting or extending the battens (9) are variable, and the rods (14) and battens (9) with their free ends in each extended position of the battens (9) are moving within a tree, and, with sufficient resistance, both the battens (9) and the rods (14) are slideable in their mounts against the force of springs to the rear.

9. Harvesting robot for picking fruit from trees according to one of the preceding claims 7 to 8,
***characterized in that***
the longitudinal edges (13) of the battens (9) are provided with brushes of elastically yielding rods that extend transversal to the battens (9), to largely close the walls (8) while in extended state.

10. Harvesting robot for picking fruits from trees according to one of the preceding claims,
***characterized in that***
the spaced rows (1, 2) of the harvesting rods (3, 4) extend horizontally and are delimited on both sides by slatted, frame-like, vertically extending walls (8), within which they are mounted in a manner to be moveable upwards and downwards.

11. Harvesting robot for picking fruit from trees according to one of the preceding claims 1 to 9,
***characterized in that***
the spaced rows (1, 2) of the harvesting rods (3, 4) run perpendicularly and are delimited on both sides by slatted, frame-like, horizontal walls (8), within which they are mounted in a manner to be moveable back and forth, sideways.

12. Harvesting robot for picking fruit from trees according to one of the preceding claims,
***characterized in that***
it can be connected with a power take-off carrier vehicle for slanted terrain (20) with power take-off shafts, by means of which the harvesting robot can be transported and operated, and by means of which the power take-off shaft can drive the associated compressor (21), and on the other hand, can drive the associated hydraulic pump for the hydraulic drives on the harvesting robot, wherein the harvesting robot is moveable into a tree and again able to be retracted by forward or backward driving of the hangar carrier vehicle (20).

13. Harvesting robot for picking fruits from trees according to one of the preceding claims 1 to 11,
***characterized in that***
it is on a separate chassis (54), constructed with drive wheels or wheels with four-wheel drive, so that it is self-propelled, wherein it has a universally pivotable support on which it is consistently able to be brought into and held in an upright position on the chassis (54), where the harvesting robot can be remotely controlled via radio through a control device or can be operated independently or integrated into a harvesting robot network for the distribution of available work, wherein the positioning of the harvesting robot relative to the tree is feasible through a GPS device with differential GPS, or with the aid of a position sensor fixed on the tree.

14. Harvesting robot for picking fruit from trees according to one of the preceding claims,
***characterized in that***
it is equipped with inclination sensors for determining its inclination or deviation from the perpendicular in each direction (pitch and roll), and that it has a control unit automatically processing the signals of the inclination sensors through the hydraulic drive, and that the height of its collecting container (16) is adjustable by motor, and that the distances between the two rows (1, 2) of harvesting rods (3, 4), the height of the collecting container (16) and the distances of the battens (9) of the sidewalls can be changed and adjusted by means of separate hydraulic, pneumatic or electric drives.

15. Harvesting robot for picking fruit from trees, according to one of the preceding claims,
***characterized in* that**
the harvesting head (15) is mounted in a pivotal manner about its vertical axis on a rotary plate (56) with a separate chassis (57), and this chassis (57) is connectable via a towbar construction (58) with a tractor or carrier vehicle for slanted terrain (20), so the harvesting head (15) on the rotary plate (56) is pivotable around its vertical axis by at least 90°, and that the harvesting robot has transmitters for reading the information sent through sensors on the trees, meant to calculate its position and direction of movement relative to a particular tree.

## Revendications

1. Robot de récolte pour cueillir des fruits d'arbres, comportant au moins deux rangées (1, 2) parallèles, saillantes et décalées de barres de cueillette (3, 4) qui sont maintenues dans un support (5) dans leur zone arrière et avec lesquelles celles-ci peuvent être poussées collectivement dans un arbre avec leurs extrémités libres (6) en avant, et peuvent être pivotées les unes par rapport aux autres avec leurs extrémités avant (6) et ouvertes à nouveau, et dans l'ensemble sont collectivement extractibles de l'arbre dans n'importe quel état pivotant, avec pelage des fruits entre les barres de cueillette (3, 4) des deux rangées (1, 2) de barres de cueillette (3, 4),
**caractérisé en ce que**
les barres de cueillette (3, 4) individuelles (3, 4) de chaque rangée (1, 2) sont montées dans le support (5) dans leur zone arrière de manière à pouvoir être déplacées en translation contre une force de ressort, de sorte que chaque barre de cueillette (3, 4) peut être arrêtée dans une rangée (1, 2) lorsque les barres de cueillette (3, 4) sont enfoncées dans un arbre lorsque leur extrémité avant (6) est percutée contre une branche du bois, alors que toutes les barres de cueillette (3, 4) ne touchant pas un obstacle peuvent être poussés plus loin dans l'arbre, selon lequel les barres de cueillette (3, 4) des deux rangées (1, 2) peuvent osciller dans leur position de translation l'une par rapport à l'autre, et peuvent être retirées de l'arbre simultanément ou après un pivotement ensemble au moyen d'un extracteur (49), toutes les barres de cueillette (3, 4) pouvant être poussées en avant par la force des forces des ressort agissant et ramenées ainsi dans leur position initiale.

2. Robots de récolte pour la cueillette des fruits de verger selon la revendication 1,
**caractérisé en ce que**
un balourd excentrique (39) pouvant tourner autour de l'axe longitudinal de la barre de cueillette (3, 4) est monté sur l'extrémité avant de la barre de cueillette (3, 4), et peut tourner au moyen d'air comprimé ou d'un entraînement électrique par la barre de cueillette (3, 4) qui est réalisée comme tube (41), de telle sorte que les barre de cueillette (3, 4) puissent être mises en vibration superposée pour une oscillation vers le haut et vers le bas et que les pointes puissent être utilisées pour peindre une zone autour des pointes à l'état de repos ou pour les mettre en vibration superposée en fonction de la vitesse de rotation du balourd.

3. Robot de récolte pour la cueillette de fruits d'arbres selon l'une des revendications précédentes, **caractérisé en ce que**
les barres de cueillette (3, 4) sur le robot de récolte dans une plage comprise entre un cinquième et un tiers de leur longueur comprise entre 1,50 m et 2.50 m de leur extrémité arrière (7) sont montés élastiquement transversalement à leur direction de déplacement, et leurs extrémités arrière (7) peuvent être déplacées motoriquement dans le sens de déplacement du ressort, de sorte que les extrémités avant (6) peuvent osciller d'un déplacement plus grand que les extrémités arrière, et sont montés élastiquement dans la direction du plan d'oscillation par le montage à ressort lorsqu'ils frappent un obstacle, et dans lequel les t barres de cueillette (3, 4) sont montées de manière à pouvoir être déviées dans toutes les directions, de sorte que lorsqu'elles frappent un obstacle avec leur pointe, elles peuvent être déviées afin d'éviter toute courbure ou fracture.

4. Robot de récolte pour la cueillette de fruits d'arbres, l'une des revendications précédentes,
**caractérisé en ce que**
les barres de prélèvement (3, 4) peuvent être poussés dans un arbre à leurs extrémités avant libres (6) en faisant partie d'un corps qui est monté sur un véhicule et peut donc être poussé dans l'arbre en conduisant avec le véhicule, ou **en ce que** le corps du véhicule comprend un ou plusieurs actionneurs d'extension et de retrait à commande hydraulique, pneumatique ou électrique, afin que l'extension et le retrait de l'arbre soient effectués par celui-ci par un mouvement relatif au moyen du véhicule.

5. Robot de récolte pour la cueillette de fruits de verger l'une des revendications précédentes,
**caractérisé en ce que**
les rangées espacées (1, 2) de barres de cueillette (3, 4) sont montées de manière déplaçable sur le robot de récolte transversalement au plan de grille formé par les barres de cueillette (3, 4), **en ce que** la tête de prélèvement (15) du robot de récolte, dans laquelle les barres de cueillette (3, 4) sont montées, est réglable en hauteur au moyen de ciseaux (11) commandables hydrauliquement ou électriquement.

6. Robot de récolte pour la cueillette de fruits d'arbres selon l'une des revendications 2 à 5,
**caractérisé en ce qu'**
un châssis (17) est monté sur la face arrière de la tête d'abattage (15) de manière à pouvoir être allongé vers l'arrière en forme de tiroir pour recevoir des barres de cueillette (3, 4) qui sont repoussées par des obstacles quand elles sont enfoncées dans un arbre, et **en ce que** des connexions pneumatiques sont prévues à l'extrémité arrière du châssis (17), pour le raccordement aux extrémités arrière de flexibles pneumatiques (55) élastiquement extensibles, dont les extrémités avant sont reliées aux extrémités arrière des barres de cueillette (3, 4), pour l'alimentation en air comprimé des excentriques rotatifs (39) à leurs extrémités avant pour les entraîner.

7. Robot de récolte pour la cueillette de fruits d'arbres selon l'une des revendications précédentes,
**caractérisé en ce que**
les rangées (1, 2) de barres de cueillette (3, 4) sont disposées sur le robot de récolte entre deux de ces rangées (1, 2) au niveau de leurs parois (8) délimitant leurs extrémités des deux côtés et comprenant une pluralité de lattes (9) qui s'étendent dans le même sens que les barres de cueillette (3, 4), sont espacées les unes des autres, sont libres à l'avant et sont retenues à leur extrémité arrière (10) sur une structure à ciseaux (11) déployable, ces lattes (9) formant chacune un cadre à lattes comme une paroi (8), et à l'intérieur de ces deux parois (8), les rangées de barres de cueillette (1, 2) peuvent être déplacées transversalement par rapport au plan de la grille des rangées (1, 2) transversalement au plan de la grille des rangées (1, 2), les lamelles (9) pouvant s'étendre transversalement à leur direction, depuis un état dans lequel la construction en ciseaux (11) est rentrée avec un espace latéral minimum des lamelles (9), leurs espaces s'élargissant de manière uniforme, pour former un cadre à lamelles, en chaque cas, le lamelles laissent un espace intercostal (12) libre dans la paroi latérale (8).

8. Robot de récolte pour la cueillette des fruits de verger selon la revendication 7,
**caractérisé en ce que**
les bords longitudinaux (13) de lattes adjacentes (9) sont reliés dans leur région arrière à au moins un support articulé dans lequel une pluralité de tiges (14) est maintenue parallèlement aux lattes (9), de sorte que les espacements des tiges (14) sont déterminés par le mouvement vers l'intérieur et l'extérieur des tiges (14), les tiges (14) et les lamelles (9) peuvent être déplacées avec leurs extrémités libres dans un arbre dans n'importe quelle position d'extension des lamelles (9), et, si la résistance est suffisante, les lamelles (9) et les tiges (14) peuvent être déplacées vers l'arrière dans leurs supports contre la force des ressorts.

9. Robot de récolte pour la cueillette de fruits d'arbres selon l'une des revendications 7 à 8,
**caractérisé en ce que**
les bords longitudinaux (13) des lamelles (9) sont munis de brosses s'étendant transversalement aux lamelles (9) et constituées de tiges élastiques, pour fermer largement les parois (8) à l'état étendu.

10. Robot de récolte pour la cueillette de fruits d'arbres selon l'une des revendications précédentes,
**caractérisé en ce que**
les rangées espacées (1, 2) de barres de cueillette (3, 4) s'étendent horizontalement et sont délimitées des deux côtés par des parois (8) s'étendant verticalement en treillis dans lesquelles elles sont montées de manière à pouvoir être déplacées vers le haut et vers le bas.

11. Robots de récolte pour la cueillette de fruits d'arbres selon l'une des revendications 1 à 9,
**caractérisé en ce que**
les rangées mutuellement espacées (1, 2) de barres de cueillette (3, 4) s'étendent verticalement et sont limitées des deux côtés par des parois horizontales en treillis (8) à l'intérieur desquelles elles sont montées de manière à pouvoir être déplacées latéralement.

12. Robots de récolte pour la cueillette de fruits d'arbres selon l'une des revendications précédentes,
**caractérisé en ce qu'**
il peut être relié à un véhicule porteur d'outil de travail en pente (20) avec des arbres de prise de force au moyen desquels le robot de récolte peut être transporté et actionné et au moyen duquel le compresseur associé (21) peut être entraîné d'une part et la pompe hydraulique associée pour les entraînements hydrauliques, d'autre part, le robot de récolte pouvant être déplacé dans un arbre par déplacement avant ou arrière du véhicule porteur d'outil de récolte en pente (20) et être tiré de celui-ci de nouveau.

13. Robot de récolte pour la cueillette des fruits de verger selon l'une des exigences 1 à 11,
**caractérisé en ce qu'**
il est monté sur son propre châssis (54) avec des chenilles d'entraînement ou des roues motrices à quatre roues motrices, de sorte qu'il est automoteur, **caractérisé en ce qu'**il présente un support pivotant de tous côtés, sur lequel il peut toujours être amené en position verticale et maintenu sur le châssis (54), dans laquelle le robot de récolte peut être commandé à distance par radio au moyen d'une unité de commande ou peut être commandé de manière autonome ou peut être intégré dans un réseau de robot de récolte pour diviser le travail d'essaimage, le positionnement du robot de récolte par rapport à l'arbre pouvant être effectué au moyen d'un dispositif GPS avec GPS différentiel ou au moyen d'un capteur de position sur l'arbre.

14. Robot de récolte pour la cueillette de fruits d'arbres selon l'une des revendications précédentes,
**caractérisé en ce qu'**
il est équipé de capteurs d'inclinaison pour déterminer son inclinaison, ou et **en ce qu'**il comporte une unité de commande au moyen de laquelle il peut être maintenu automatiquement dans le fil à plomb en traitant les signaux des capteurs d'inclinaison au moyen de moyens d'entraînement hydrauliques, et **en ce que** son récipient collecteur (16) est disposé sur celui-ci de manière à pouvoir être réglé en hauteur motoriquement, et **en ce que** les distances entre les deux rangées (1, 2) de barres de cueillette (3, 4), la hauteur du récipient collecteur (16) et les distances entre les lamelles (9) des parois latérales peuvent être modifiées et réglées au moyen de commandes hydrauliques, pneumatiques ou électriques séparées.

15. Robot de récolte pour la cueillette de fruits d'arbres selon l'une des revendications précédentes, **caractérisé en ce que**
la tête d'abattage (15) est montée sur un plateau tournant (56) ayant un châssis séparé (57) pivotant autour de son axe vertical, et ledit châssis (57) peut être relié par une structure de timon (58) à un tracteur ou un véhicule porteur d'outil de suspension (20), de sorte que la tête d'abattage (15) du plateau tournant (56) peut pivoter d'au moins 90° autour de son axe vertical et que le robot abatteur possède des émetteurs pour lire des capteurs sur les arbres, et un dispositif pour calculer sa position et la direction du mouvement relativement à un arbre donné.
